# EUROPEAN PATENT SPECIFICATION

(11) **EP 3 182 645 B1**
(45) Date of publication and mention of the grant of the patent: **10.10.2018**
(21) Application number: 14899653.1
(22) Date of filing: 04.11.2014
(51) Int. Cl.: H04L 12/24

(54) **NETWORK PROTECTION SWITCHING METHOD, NETWORK DEVICE AND STORAGE MEDIUM**
NETZWERKSCHUTZSCHALTVERFAHREN, NETZWERKVORRICHTUNG UND SPEICHERMEDIUM
PROCÉDÉ DE COMMUTATION DE PROTECTION DE RÉSEAU, DISPOSITIF DE RÉSEAU ET SUPPORT D'INFORMATIONS

(30) Priority: 15.08.2014 CN 201410403362
(43) Date of publication of application: 21.06.2017
(73) Proprietor: ZTE Corporation, Shenzhen, Guangdong 518057 (CN)
(72) Inventor: WANG, Hua, Shenzhen Guangdong 518057 (CN); CUI, Chunlai, Shenzhen Guangdong 518057 (CN)
(74) Representative: Lavoix
(86) International application number: PCT/CN2014/090254
(87) International publication number: WO 2016/023278

(56) References cited:
- EP-A2- 2 713 536
- WO-A1-2013/185567
- WO-A1-2014/029286
- CN-A- 1 653 833
- CN-A- 102 916 842
- CN-A- 102 916 842

## Description

### TECHNICAL FIELD

The disclosure relates to Packet Transport Network (PTN) and Internet Protocol (IP) Radio Access Network (IPRAN) technologies, and more particularly to a network protection switching method, a network device and a storage medium.

### BACKGROUND

A PTN technology is usually a PTN technology with a layer-2 data switching function and designed and developed for a connecting technology, and the PTN technology not only integrates functions of statistical multiplexing, multicast and the like of a layer-2 device, but also provides a function of implementing end-to-end carrier-class Ethernet service protection, bandwidth planning and the like on the basis of a Layered Service Provider (LSP). Therefore, compared with advantages of a conventional layer-2 data network, the PTN technology has obvious advantages in terms of high-level service transport, network failure location and the like. At present, along with further definition and detailing of a service requirement, the PTN technology is gradually developed and perfected to have a function of a layer-3 data switching capability.

An IPRAN technology is mainly used for an IP metropolitan area network, and an IPRAN device is located in access and convergence layers of the metropolitan area network. Moreover, the IPRAN device is connected with a Service Router (SR) in an uplink direction, and is connected with a client device and a base station device in a downlink direction. Wherein, the IPRAN technology has a main advantage of complete and mature layer-3 data switching functions, including support for a comprehensive IP Version 4 (IPV4) or IP Version 6 (IPV6) layer-3 data forwarding and routing function, a Multi-Protocol Label Switching (MPLS) layer-3 data switching function, a layer-3 data switching MPLS Virtual Private Network (VPN) function and a layer-3 data switching multicast function. In addition, the IPRAN technology also integrates some elements of a conventional transmission technology in terms of network management, Operation Administration and Maintenance (OAM), synchronization, protection and the like. Wherein, a routing function includes a static routing function and a dynamic routing function, and the dynamic routing function includes a function of an intra-domain routing protocol of a Routing Information Protocol/Open Shortest Path First/Intermediate System to Intermediate System (RIP/OSPF/ISIS) and a function of an inter-domain routing of a Border Gateway Protocol (BGP).

The PTN technology and the IPRAN technology both may support hierarchical OAM mechanism, wherein the hierarchical OAM mechanism refers to that the PTN technology and the IPRAN technology both support OAM of a network layer, a service layer and an access link layer and support fine monitoring and detection of a control network to implement fast failure judgment and recovery and enhance predictability and controllability of the network. A difference is that the PTN technology mainly adopts OAM mechanism of a Multi-Protocol Label Switching-Transport Profile (MPLS-TP), while the IPRAN technology usually adopts Bidirectional Forwarding Detection (BFD) OAM mechanism. Moreover, the PTN technology supports a linear protection function for a Pseudo-Wire (PW) layer and an LSP layer and a multiple protection function for a ring network and the like, and the IPRAN technology is a protection technology which mainly implements a layer-3 data switching function-based dynamic protocol by virtue of Fast ReRoute (FRR) and the like.

At present, neither the PTN technology nor the IPRAN technology may perfectly meet all requirements of an operating company on a bearer network, so that a trend of integrating the PTN technology and the IPRAN technology becomes more and more obvious, and moreover, the network integration trend has undoubtedly become a main development direction of telecommunications and even the whole communication industry in the future.

WO 2013/185567A1 discloses an apparatus and method for protection switching in a packet transport network. The apparatus includes a hardware unit and a software unit, wherein, the hardware unit includes an Operation, Administration and Maintenance (OAM) packet receiving and transmitting module, an alarm detecting module, an exchange processing module, an alarm propagating module and a protection group policy decision module; the software unit includes a protection group service support module and an OAM support module; for each service, the alarm propagating module judgaes, according to an OAM alarm detected by the alarm detecting module or a path failure condition of a service layer associated with the service, a path failure condition of a work path and a protection path associated with the service, and updates a protection group where the service is located in the protection group policy decision module; for each obtained path failure condition, the protection group policy decision module determines a switching policy decision according to a protection mode, and notifies the exchange processing module of the switching policy decision; and the OAM support module transmits OAM configuration information to the OAM packet receiving and transmitting module, and instruct the OAM packet receiving and transmitting module to receive and transmit OAM messages according to the OAM configuration information.

### SUMMARY

In order to solve the existing technical problem, embodiments of the disclosure provide a network protection switching method, a network device and a storage medium, which may unify path switching decision making methods for services corresponding to a PTN and an IPRAN and clearly and completely determine a path switching decision making method for the services corresponding to the PTN and the IPRAN.

The technical solutions of the embodiments of the disclosure are implemented as follows: the embodiments of the disclosure provide a network protection switching method, which may include that:
a hierarchically distributed flow point model is determined according to all ports corresponding to a Packet Transport Network (PTN) or an Internet Protocol (IP) Radio Access Network (IPRAN) or physical ports or physical port sets in a physical connection channel layer; and
a switching decision making method for a service corresponding to the PTN or the IPRAN is determined according to the flow point model;
further include that:
   optimal path information of the service corresponding to the PTN or the IPRAN is determined according to the switching decision making method, and the optimal path information is output, wherein
   the optimal path information is effective path information by which the service is intended to pass through each flow point in the flow point model, and the effective path information is identification of a path of flow points corresponding to physical ports; and
   determining the hierarchically distributed flow point model according to all the ports corresponding to the PTN or the IPRAN or the physical ports or physical port sets in the physical connection channel layer includes:
      all the ports corresponding to the PTN or the IPRAN or the physical ports or physical port sets in the physical connection channel layer are determined as flow points of a first layer, flow points of a next layer are determined according to the flow points of the first layer and a first preset rule, and the hierarchically distributed flow point model is determined.

In the solution, after the step that the hierarchically distributed flow point model is determined according to all the ports corresponding to the PTN or the IPRAN or the physical ports or physical port sets in the physical connection channel layer, the method may further include that:
working paths or working paths and protection paths of the service corresponding to the PTN or the IPRAN on the flow points in the flow point model are determined according to a second preset rule; and
alarming mechanism of each flow point is determined according to a hierarchically distributed structure of the flow points of each layer in the flow point model;
wherein determining the alarming mechanism of each flow point according to the hierarchically distributed structure of the flow points of each layer includes:
   determining that alarming information of each flow point in the flow points of the first layer is sourced from alarming information generated by physical ports corresponding to the PTN or the IPRAN, or alarming information generated by corresponding Transport MPLS Section, TMS, OAM in the physical connection channel layer; and
   determining that alarming information of each flow point in the flow points of the i-th layer is sourced from the OAM of this layer or alarming information generated by the service layers,
   wherein i is a positive integer greater than or equal to 2 and less than or equal to N.

In the solution, the step that the switching decision making method for the service corresponding to the PTN or the IPRAN is determined according to the flow point model may include that:
the switching decision making method for the service corresponding to the PTN or the IPRAN is determined according to the alarming mechanism of each flow point and path information of the service corresponding to the PTN or the IPRAN on the flow points,
wherein the path information may be identification of the working paths and/or the protection paths through which the service corresponding to the PTN or the IPRAN is intended to pass through each flow point in the flow point model.

In the solution, the step that the switching decision making method for the service corresponding to the PTN or the IPRAN is determined according to the alarming mechanism of each flow point and the path information of the service corresponding to the PTN or the IPRAN on the flow points may include that:
path information by which the service corresponding to the PTN or the IPRAN passes through one flow point is determined according to the alarming mechanism of each flow point in the flow point model and the path information of the service corresponding to the PTN or the IPRAN on the flow points, and optimal path information by which the service corresponding to the PTN or the IPRAN passes through all the flow points is determined according to the path information by which the service corresponding to the PTN or the IPRAN passes through each flow point.

In the solution, the method may further include that:
working instruction information or protection instruction information of each flow point in the flow point model is determined according to the effective path information,
wherein the working instruction information may be instruction information of selecting the working path for passing when the service corresponding to the PTN or the IPRAN passes through the flow point; and
the protection instruction information may be instruction information of selecting the protection path for passing when the service corresponding to the PTN or the IPRAN passes through the flow point.

In the solution, the method may further include that:
OAM information is arranged to the working path and protection path of each flow point according to the hierarchically distributed structure of the flow points of each layer in the flow point model to determine an OAM label of the working path or protection path of each flow point through which the service corresponding to the PTN or the IPRAN passes according to the OAM information;
the method may further include that:
   unique identification of the working path of the service corresponding to the PTN or the IPRAN on each flow point in the flow point model is determined, unique identification of the protection path of the service corresponding to the PTN or the IPRAN on each flow point is determined, and the unique identification of the working path and the unique identification of the protection path corresponding to each flow point are determined as OAM labels corresponding to each path.

In the solution, flow points of client layers of the flow points of the first layer may be flow points of a next layer; the flow points of the first layer may have no service layers, or, flow points of the service layers of the flow points of the first layer may be ports corresponding to the PTN or the IPRAN; and the service corresponding to the PTN or the IPRAN on each flow point in the flow points of the first layer may have one working path, or one working path and one protection path.

In the solution, the method may further include that:
when it is determined that there are flow points of an N-layer structure according to a service type corresponding to the PTN or the IPRAN and the first preset rule, determining that: flow points of an i-th layer are client layers of flow points of an (i-1)-th layer; the service corresponding to the PTN or the IPRAN on each flow point in the flow points of the i-th layer has one working path, or has one working path and one protection path; client layers of the flow points of the i-th layer are flow points of an (i+1)-th layer, or is a user service of this layer; and service layers of the flow points of the i-th layer are the flow points of the (i-1)-th layer; and
when i is equal to N, client layers of flow points of an Nth layer are the user service of this layer,
wherein N may be a positive integer greater than or equal to 2, and i may be a positive integer greater than or equal to 2 and less than or equal to N.

The embodiments of the disclosure further provide a network apparatus, which may include:
a modelling processing device, arranged to determine a hierarchically distributed flow point model according to all ports corresponding to a PTN or an IPRAN or physical ports or physical port sets in a physical connection channel layer; and
a decision making processing device, arranged to determine a switching decision making method for a service corresponding to the PTN or the IPRAN according to the flow point model, determine optimal path information of the service corresponding to the PTN or the IPRAN according to the switching decision making method, and output the optimal path information,
wherein the optimal path information is effective path information by which the service is intended to pass through each flow point in the flow point model, and the effective path information is identification of a path of flow points corresponding to physical ports; and
determining the hierarchically distributed flow point model according to all the ports corresponding to the PTN or the IPRAN or the physical ports or physical port sets in the physical connection channel layer comprises:
   all the ports corresponding to the PTN or the IPRAN or the physical ports or physical port sets in the physical connection channel layer are determined as flow points of a first layer, flow points of a next layer are determined according to the flow points of the first layer and a first preset rule, and the hierarchically distributed flow point model is determined.

In the solution, the modelling processing device may further be arranged to determine all the ports corresponding to the PTN or the IPRAN or the physical ports or physical port sets in the physical connection channel layer as flow points of a first layer, determine flow points of a next layer according to the flow points of the first layer and a first preset rule, and determine the hierarchically distributed flow point model;
the apparatus may further include:
a path processing device, arranged to determine working paths or the working paths and protection paths of the service corresponding to the PTN or the IPRAN on the flow points in the flow point model according to a second preset rule; and
an alarming processing device, arranged to determine alarming mechanism of each flow point according to a hierarchically distributed structure of the flow points of each layer in the flow point model.

In the solution, the decision making processing device may further be arranged to determine the switching decision making method for the service corresponding to the PTN or the IPRAN according to the alarming mechanism of each flow point and path information of the service corresponding to the PTN or the IPRAN on the flow points,
wherein the path information may be identification of the working paths and/or the protection paths through which the service corresponding to the PTN or the IPRAN is intended to pass through each flow point in the flow point model.

In the solution, the apparatus may further include:
a label processing device, arranged to configure OAM information to the working path and protection path of each flow point according to the hierarchically distributed structure of the flow points of each layer in the flow point model to determine an OAM label of the working path or protection path of each flow point through which the service corresponding to the PTN or the IPRAN passes according to the OAM information.

The embodiments of the disclosure further provide a computer-readable storage medium, in which a computer-executable instruction may be stored, the computer-executable instruction being arranged to execute the abovementioned network protection switching method.

According to the network protection switching method, network device and storage medium of the embodiments of the disclosure, a hierarchical protection structure may be determined through a unified hierarchical flow point structure, path switching decision making methods for services corresponding to the PTN and the IPRAN are further unified according to the hierarchical flow point structure and the hierarchical protection structure, and moreover, a path switching decision making method for the services corresponding to the PTN and the IPRAN may be clearly and completely determined according to the hierarchical flow point structure, the protection path set in each flow point and the alarming mechanism of each flow point in the embodiments of the disclosure. Therefore, adopting the embodiments of the disclosure may reduce design complexity and design cost of path protection and path selection and shorten a development period, and may further lay a foundation for improving reliability, extensibility, switching performance and the like of a system adopting the method of the embodiments of the disclosure.

### BRIEF DESCRIPTION OF THE DRAWINGS

Fig. 1 is an implementation flowchart of a network protection switching method according to an embodiment of the disclosure;
Fig. 2 is a structure schematic diagram of a network device according to an embodiment of the disclosure;
Fig. 3 is a networking schematic diagram of specific implementation according to embodiment 2 of the disclosure;
Fig. 4 is a flowchart of specific implementation according to embodiment 2 of the disclosure;
Fig. 5 is a topological diagram of flow points of four layers according to embodiment 2 of the disclosure;
Fig. 6 is a networking schematic diagram of specific implementation according to embodiment 3 of the disclosure;
Fig. 7 is a flowchart of specific implementation according to embodiment 3 of the disclosure; and
Fig. 8 is a topological diagram of flow points of four layers according to embodiment 3 of the disclosure.

### DETAILED DESCRIPTION

For understanding characteristics and technical contents of the embodiments of the disclosure in more detail, implementation of the embodiments of the disclosure will be elaborated below with reference to the drawings. The appended drawings are only provided for description as references and not intended to limit the disclosure.

### Embodiment 1

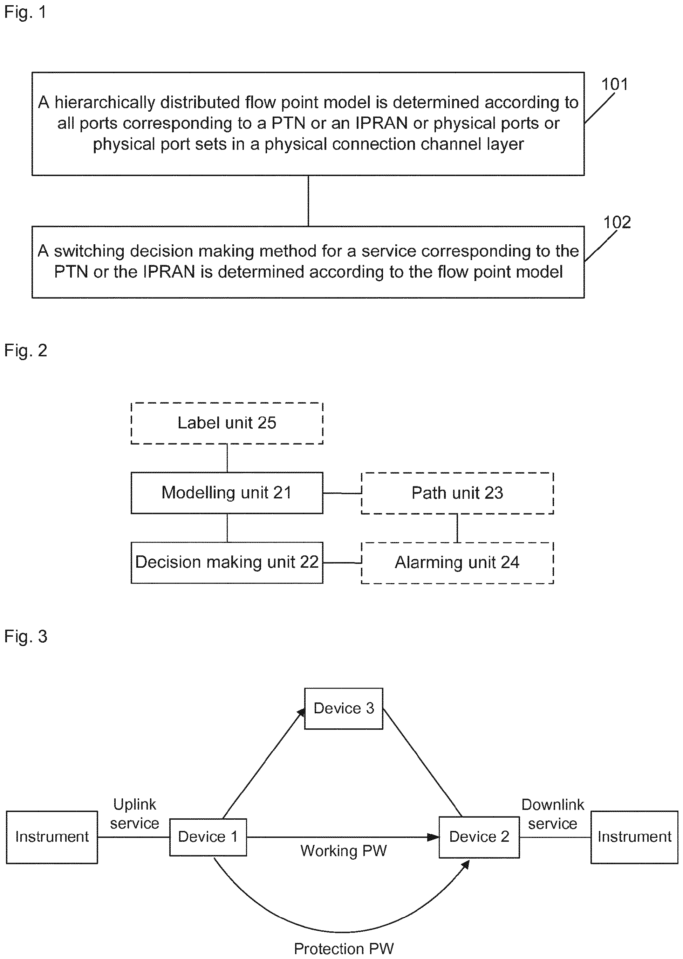

Fig. 1 is an implementation flowchart of a network protection switching method according to an embodiment of the disclosure. As shown in Fig. 1, the method includes the following steps.

Step 101: a hierarchically distributed flow point model is determined according to all ports corresponding to a PTN or an IPRAN or physical ports or a physical port set in a physical connection channel layer.

In the solution, the step that the hierarchically distributed flow point model is determined according to all the ports corresponding to the PTN or the IPRAN or the physical ports or physical port set in the physical connection channel layer includes Step 101A.

In the solution, after the step that the hierarchically distributed flow point model is determined according to all the ports corresponding to the PTN or the IPRAN or the physical ports or physical port set in the physical connection channel layer, the method further includes Step 101B and Step 101C.

Wherein,
Step 101A: all the ports corresponding to the PTN or the IPRAN or the physical ports or physical port set in the physical connection channel layer (a virtual section (VS) layer) are determined as flow points of a first layer, flow points of a next layer are determined according to the flow points of the first layer and a first preset rule, and the hierarchically distributed flow point model is determined.

In the solution, client layers of the flow points of the first layer are own corresponding flow points of the next layer; the flow points of the first layer have no service layers, or, the service layers of the flow points of the first layer are the ports corresponding to the PTN or the IPRAN; and the service corresponding to the PTN or the IPRAN on each flow point in the flow points of the first layer has one working path, or has one working path and one protection path.

In the solution, the method further includes that:
when it is determined that there are flow points of an N-layer structure according to a service type corresponding to the PTN or the IPRAN and the first preset rule, flow points of an i-th layer are client layers of flow points of an (i-1)-th layer; the service corresponding to the PTN or the IPRAN on each flow point in the flow points of the i-th layer has one working path, or has one working path and one protection path; client layers of the flow points of the i-th layer are flow points of an (i+1)-th layer, or is a user service of this layer; service layers of the flow points of the i-th layer are the flow points of the (i-1)-th layer; and
when i is equal to N, client layers of flow points of an N-th layer are the user service of this layer,
wherein N is a positive integer greater than or equal to 2, and i is a positive integer greater than or equal to 2 and less than or equal to N.

Here, the model for the service corresponding to the PTN or the IPRAN is hierarchical. The model for the service corresponding to the PTN usually has a Transport MPLS Section (TMS), a Transport MPLS Path (TMP) and a Transport MPLS Circuit (TMC). The model for the service corresponding to the IPRAN usually has an IP layer, an LSP layer, a PW layer and the like. In order to accurately describe hierarchical relationships and protection relationships of all services corresponding to the PTN and the IPRAN, the multilayer services corresponding to the PTN or the IPRAN are abstracted into hierarchical flow points, and an N-layer flow point model is established,
wherein N is related to a service type corresponding to the PTN or the IPRAN, and N may be determined according to the service type corresponding to the PTN or the IPRAN and the first preset rule.

The N-layer flow point model is specifically as follows.
(1) The flow points of the first layer are determined, and the flow points of the first layer include, but not limited to, the following characteristics:
   all the ports corresponding to the PTN or the IPRAN, or all corresponding ports in the VS layer; the ports include, but not limited to physical ports, logical ports or port entities; and specifically, the ports include, but not limited to: Gigabit Ethernet (GE), Fast Ethernet (FE), a Trunk group, a MultiLink Point-to-Point Protocol (ML-PPP) group, Point-to-Point Protocol-Packet over Synchronous Optical Network/Synchronous Digital Hierarchy (SONET/SDH) (PPP-POS), a Virtual Channel Group (VCG), a Digital Subscriber Line (DSL) port/DSL group, a Generic Route Encapsulation (GRE) tunnel, an E1 channel and an Inverse Multiplexing for Asynchronous Transfer Mode (ATM) (IMA) group.
   In the solution, the flow points of the first layer are bidirectional flow points;
   the client layers of the flow points of the first layer are own corresponding flow points of the next layer, i.e. flow points of a second layer;
   the flow points of the first layer have no service layers, or, when the flow points of the first layer are all the corresponding ports in the VS layer, the service layers of the flow points of the first layer are the ports corresponding to the PTN or the IPRAN;
   the service corresponding to the PTN or the IPRAN on each flow point in the flow points of the first layer has one working path, or has one working path and one protection path; and
   here, each flow point in the flow points of the first layer usually has only one working path and no protection path.
(2) The flow points of the second layer are determined.

Wherein, the flow points of the second layer are the client layers of the flow points of the first layer, that is, the flow points of the second layer are arranged to describe a client layer model of the flow points of the first layer.

The service corresponding to the PTN or the IPRAN on each flow point in the flow points of the second layer has one working path, or has one working path and one protection path. Here, the protection paths of the service corresponding to the PTN or the IPRAN may be arranged on the flow points of each layer according to the second preset rule, each flow point in the flow points of the first layer usually has only one working path and no protection path, and from the flow points of the second layer, protection paths may be arranged on each flow point in the flow points of the second layer. Therefore, transmission paths of the service corresponding to the PTN or the IPRAN may be considered to be extended from the flow points of the second layer to ensure smooth transmission of data information of the service corresponding to the PTN or the IPRAN.

Each flow point in the flow points of the second layer is a bidirectional flow point, i.e. an ingress flow point and an egress flow point, wherein the ingress flow points are in downlink receiving directions of the service corresponding to the PTN or the IPRAN, and the egress flow points are in uplink sending directions of the service corresponding to the PTN or the IPRAN. For example, when the data information of the service corresponding to the PTN or the IPRAN is sent to the flow points of the second layer from the flow points of the first layer in an uplink direction, the flow points of the second layer are ingress flow points, and when the data information of the service corresponding to the PTN or the IPRAN is sent to the flow points of the first layer from the flow points of the second layer in a downlink direction, the flow points of the second layer are egress flow points.

Client layers of the flow points of the second layer are flow points of a third layer, or a user service of this layer.

Service layers of the flow points of the second layer are the flow points of the first layer.
(3) The flow points of the third layer are determined.

Wherein, the flow points of the third layer are the client layers of the flow points of the second layer, that is, the flow points of the third layer are arranged to describe a client layer model of the flow points of the second layer.

The service corresponding to the PTN or the IPRAN on each flow point in the flow points of the third layer has one working path, or has one working path and one protection path. Here, the protection paths of the service corresponding to the PTN or the IPRAN may be arranged on the flow points of each layer according to the second preset rule, each flow point in the flow points of the first layer usually has only one working path and no protection path, and from the flow points of the second layer, protection paths may be arranged on each flow point in the flow points of the second layer and each flow point corresponding to the flow points of the third layer. Therefore, the transmission paths of the service corresponding to the PTN or the IPRAN may be considered to be extended from the flow points of the second layer by combining the protection paths arranged on the flow points of the third layer to ensure smooth transmission of the data information of the service corresponding to the PTN or the IPRAN.

Each flow point in the flow points of the third layer is a bidirectional flow point, i.e. an ingress flow point and an egress flow point. For example, when the data information of the service corresponding to the PTN or the IPRAN is sent to the flow points of the third layer from the flow points of the second layer, the flow points of the third layer are ingress flow points, and when the data information of the service corresponding to the PTN or the IPRAN is sent to the flow points of the second layer from the flow points of the third layer, the flow points of the third layer are egress flow points.

Client layers of the flow points of the third layer are flow points of a fourth layer, or a user service of this layer.

Service layers of the flow points of the third layer are the flow points of the second layer.
(4) By parity of reasoning, flow points of an i-th layer are determined according to a method of Steps (2) and (3).

Wherein, the flow points of the i-th layer are client layers of flow points of an (i-1)-th layer, that is, the flow points of the i-th layer are arranged to describe a client layer model of the flow points of the (i-1)-th layer.

The service corresponding to the PTN or the IPRAN on each flow point in the flow points of the i-th layer has one working path, or has one working path and one protection path.

Each flow point in the flow points of the i-th layer is a bidirectional flow point, i.e. an ingress flow point and an egress flow point.

Client layers of the flow points of the i-th layer are flow points of an (i+1)-th layer, or a user service of this layer.

Service layers of the flow points of the i-th layer are the flow points of the (i-1)-th layer.
(5) Until flow points of an N-th layer are determined according to the method of Steps (2), (3) and (4).

Wherein, the flow points of the N-th layer are client layers of flow points of the (N-1)-th layer, that is, the flow points of the N-th layer are arranged to describe a client layer model of the flow points of the (N-1)-th layer.

The service corresponding to the PTN or the IPRAN on each flow point in the flow points of the N-th layer has one working path, or has one working path and one protection path.

Each flow point in the flow points of the N-th layer is a bidirectional flow point, i.e. an ingress flow point and an egress flow point.

Client layers of the flow points of the N-th layer are the service corresponding to the PTN or the IPRAN on each flow point of this layer.

Service layers of the flow points of the N-th layer are the flow points of the (N-1)-th layer.

Step 101B: working paths or the working paths and protection paths of the service corresponding to the PTN or the IPRAN on the flow points in the flow point model are determined according to a second preset rule.

Here, the working paths or the working paths and protection paths of the service corresponding to the PTN or the IPRAN on the flow points are determined according to the second preset rule, and a hierarchical protection model is determined according to a hierarchically distributed structure of the flow points of each layer to ensure smooth transmission of the data information of the service corresponding to the PTN or the IPRAN.

Specifically, the flow points of the first layer have no protection group under a normal condition, that is, each flow point in the flow points of the first layer only has a working path and no protection path under the normal condition, so that the hierarchical protection model usually starts from the flow points of the second layer, that is, each flow point starting from the flow points of the second layer has one protection path and one working path. Furthermore, each flow point in the flow points of the second layer is an egress flow point as well as an ingress flow point, so that each flow point with both the working path and the protection path in the flow points of the second layer is called as a protection group, that is, a protection group corresponds to an ingress flow point and an egress flow point.

It is important to note that each flow point in the flow points of the second layer may have both a working path and a protection path, or each of a part of flow points in the flow points of the second layer may have both a working path and a protection path, that is, whether each flow point in the flow points of the second layer has a protection path or not may be determined according to the service type arranged on the flow point, or whether each flow point has a protection path or not is determined according to the second preset rule.

For example, for an N-layer flow point model, at most an N-1-layer protection model may be determined according to the N-layer flow point model and the second preset rule, specifically as follows.
(1) A first-layer protection, corresponding to a bottommost-layer protection in the N-layer flow point model, and namely corresponding to protection implemented for the flow points of the second layer in the N-layer flow point model.
   The first-layer protection includes, but not limited to: ordinary ring network protection, shared ring network protection, Traffic Engineer (TE) FRR protection, TE Hotstandby (HSB) and the like.
(2) A second-layer protection, corresponding to a second bottommost-layer protection in the N-layer flow point model, and namely corresponding to protection implemented for the flow points of the third layer in the N-layer flow point model.
   The second-layer protection includes, but not limited to: linear tunnel 1+1/1:1, Label Distribution Protocol (LDP) FRR protection, IP FRR protection and the like.
(3) A third-layer protection, corresponding to a third bottommost-layer protection in the N-layer flow point model, and namely corresponding to protection implemented for flow points of a fourth layer in the N-layer flow point model.
   The third-layer protection includes, but not limited to: PW 1+1/1:1, VPN FRR protection, PW FRR protection and the like.
(4) An (N-1)-th-layer protection, corresponding to a second topmost-layer protection in the N-layer flow point model, and namely corresponding to protection implemented for the flow points of the N-th layer in the N-layer flow point model.
   (N-1)-layer protection formed by superimposing the first-layer protection, the second-layer protection to the (N-1)-th-layer protection, i.e. protection formed by N-1 layers of protection over the flow points of the N-th layer, includes, but not limited to: superimposed scenario protection such as PW FRR superimposed with LDP FRR superimposed with TE HSB, IP superimposed with IP/LDP FRR superimposed with TE FRR/HSB, VPN FRR superimposed with LDP FRR superimposed with TE HSB and PW 1:1/1+1 superimposed with LSP 1:1/1+1 superimposed with wrapping protection, etc.

Therefore, a complete flow point topology model, i.e. a service topology model, may be obtained. According to the service type and a service configuration, on each flow point layer, protection may be enabled, that is, the protection paths are selected, and protection may also not be enabled, that is, the protection paths are not established. For the flow points without protection, it defaults that only the working paths are effective; for the flow points with protection, each of them has two paths, i.e. the working path and the protection path. The path through which the current effective service is intended to pass is selected according to alarming states or Automatic Protection Switching (APS) decision making mechanisms and the like of the working paths and protection paths of each layer, the flow point topology model is maintained timely, switching of the protection groups is completed through a mapping relationship between a protection group and a flow point, and after switching, the original service topology model is updated into a new service topology model. Therefore, a service protection task is implemented, and smooth transmission of the data information corresponding to the service is completed.

Step 101C: alarming mechanism of each flow point is determined according to a hierarchically distributed structure of the flow points of each layer in the flow point model.

When it is determined that there are flow points of an N-layer structure according to the service type corresponding to the PTN or the IPRAN and the first preset rule, in the solution, the step that the alarming mechanism of each flow point is determined according to the hierarchically distributed structure of the flow points of each layer includes that:
it is determined that alarming information of each flow point in the flow points of the first layer is sourced from alarming information generated by physical ports corresponding to the PTN or the IPRAN, or alarming information generated by corresponding TMS OAM in the VS layer; and
it is determined that alarming information of each flow point in the flow points of the i-th layer is sourced from alarming information generated by OAM or service layers of this layer,
wherein i is a positive integer greater than or equal to 2 and less than or equal to N.

For example, for the N-layer flow point model, the alarming mechanisms of the flow points of each layer are determined specifically as follows.

The states of the paths of each protection group are maintained according to alarming information generated by the ingress flow points in the layer to which the protection group belongs, and alarming information generation mechanism for the ingress flow points on the working paths and the protection paths is as follows, wherein the alarming information generation mechanism for the ingress flow points on the working paths and the protection paths is also called as reproduction alarming mechanism. Here, the flow points of each layer are all bidirectional, so that all the flow points in the N-layer flow point model may serve as ingress flow points.

The alarming information generation mechanism for the ingress flow points on the working paths and the protection paths includes that:
(1) the alarming information of each flow point in the flow points of the first layer is sourced from the alarming information generated by the physical ports corresponding to the PTN or the IPRAN, or alarming information generated by corresponding TMS OAM in the VS layer,
   wherein a source of the alarming information of each flow point in the flow points of the first layer includes, but not limited to, alarming information generated by a failure such as a physical port failure, optical module uninstallation and link layer non-synchronization.
   Here, when the flow points of the first layer are all the ports corresponding to the PTN or the IPRAN, the alarming information of each flow point in the flow points of the first layer is sourced from the alarming information generated by the physical ports corresponding to the PTN or the IPRAN; and
   when the flow points of the first layer are all corresponding ports in the VS layer, the alarming information of each flow point in the flow points of the first layer is sourced from the alarming information generated by the corresponding physical ports in the VS layer.
(2) The alarming information of each flow point in the flow points of the second layer is sourced from the alarming information generated by OAM or service layers of this layer,
   wherein the alarming information generated by OAM of this layer, i.e. the alarming information generated by OAM of the flow points of the second layer, includes, but not limited to: alarming information generated by Loss of Continuity (LOC) of OAM, a Remote Defect Indicator (RDI), Mismerge (MMG), an Unexpected Message Exchange Pattern (UNMEP) in the PTN, or BFD LOC and the like in the IPRAN; and
   the alarming information generated by the service layers of this layer, i.e. the alarming information generated by the service layers of the flow points of the second layer, is the alarming information generated by the flow points of the first layer.
   Specifically, alarming information generated by a first flow point in the flow points of the second layer is sourced from alarming information generated by a second flow point corresponding to the first flow point in the flow points of the first layer, wherein the second flow point is a flow point corresponding to the first flow point in the flow points of the first layer; and a corresponding relationship between the first flow point and the second flow point refers to that the user service may pass through the second flow point after passing through a path between the first flow point and the second flow point from the first flow point, so that it is indicated that the first flow point corresponds to the second flow point.
(3) Alarming information of each flow point in the flow points of the third layer is sourced from alarming information generated by OAM or service layers of this layer,
   wherein the alarming information generated by OAM of this layer, i.e. the alarming information generated by OAM of the flow points of the third layer, includes, but not limited to: alarming information generated by OAM LOC, RDI, MMG, UNMEP in the PTN, or BFD LOC and the like in the IPRAN; and
   the alarming information generated by the service layers of this layer, i.e. the alarming information generated by the service layers of the flow points of the third layer, is the alarming information generated by the flow points of the second layer.

Specifically, alarming information generated by a third flow point in the flow points of the third layer is sourced from alarming information generated by a fourth flow point corresponding to the third flow point in the flow points of the second layer, wherein the fourth flow point is a flow point corresponding to the third flow point in the flow points of the second layer; and a corresponding relationship between the third flow point and the fourth flow point refers to that the user service may pass through the fourth flow point after passing through a path between the third flow point and the fourth flow point from the third flow point, so that it is indicated that the third flow point corresponds to the fourth flow point.

Here, if the flow points in the flow points of the second layer have protection paths, the alarming information generated by the service layers of the flow points of the third layer is only alarming information generated by effective paths in the flow points of the second layer, wherein the effective paths are current automatically updated paths corresponding to each flow point after switching the flow points of the second layer according to the switching decision making method; and when the service is switched in the flow points of the second layer, that is, when a path through which the service is intended to pass is switched, alarms are reproduced on the paths of the flow points of the third layer after a proper delay, so that when no holdoff is arranged in the flow points of the third layer but performing delay processing when alarms are reproduced from the flow points of the second layer to the flow points of the third layer, which may effectively prevent the problem that the alarms of the flow points of the second layer are sensed by the flow points of the third layer before switching to cause mistaken switching at the flow points of the third layer. For example, a working path for passing is selected according to initial path information when the service passes through a flow point A in the flow points of the second layer, and if a working path of the flow point A has alarming information at this moment, the path may be switched when the service passes through the flow point A. However, if no holdoff is arranged in the flow points of the third layer, the flow points of the third layer may reproduce alarms through the flow points of the service layers, that is, a flow point B corresponding to the working path of the flow point A in the flow points of the third layer may generate an alarm due to alarming of the flow point A, so that the flow point B in the flow points of the third layer may perform mistaken switching. Therefore, in order to avoid the problem of mistaken switching at the flow points of the third layer, no holdoff is arranged in the flow points of the third layer but delay processing is performed when the alarms are reproduced from the flow points of the second layer to the flow points of the third layer, moreover, it is only required that delay time is longer than processing time, from detection of the alarming information to completion of updating flow point topology of the flow points of the second layer after path switching according to the switching decision making method, of the flow points of the second layer, and in such a manner, the problem, that the alarms of the flow points of the second layer are sensed by the flow points of the third layer before switching to cause mistaken switching at the flow points of the third layer, may be effectively prevented, wherein updating the flow point topology of the flow points of the second layer refers to updating working instruction information of each flow point in the flow points of the second layer in a current state.
(4) Alarming information of each flow point in the flow points of the N-th layer is sourced from the alarming information generated by OAM or service layers of this layer.

Wherein, the alarming information generated by OAM of this layer, i.e. the alarming information generated by OAM of the flow points of the N-th layer, includes, but not limited to: alarming information generated by of OAM LOC, RDI, MMG, UNMEP in the PTN, or BFD LOC and the like in the IPRAN; and
the alarming information generated by the service layers of this layer, i.e. the alarming information generated by the service layers of the flow points of the N-th layer, is alarming information generated by the flow points of the (N-1)-th layer.

Here, if the flow points in the flow points of the N-th layer have protection paths, the alarming information generated by the service layers of the flow points of the N-th layer is only alarming information generated by current effective paths; and when the service is switched in the flow points of the (N-1)-th layer, that is, when a path through which the service is intended to pass is switched, alarms are reproduced on the paths of the flow points of the N-th layer after a proper delay, so that the problem, that alarms of the flow points of the (N-1)-th layer are sensed by the flow points of the N-th layer before switching to cause mistaken switching at the flow points of the N-th layer, may be prevented when no holdoff is arranged in the flow points of the Nth layer.

It is important to note that the alarming information of the flow points in the embodiment is all generated by the alarming information generated by the paths corresponding to the flow points, so that the alarming information generated by the flow points and mentioned in the example all refers to the alarming information generated by the paths corresponding to the flow points.

Step 102: a switching decision making method for a service corresponding to the PTN or the IPRAN is determined according to the flow point model.

In the solution, the step that the switching decision making method for the service corresponding to the PTN or the IPRAN is determined according to the flow point model includes that:
the switching decision making method for the service corresponding to the PTN or the IPRAN is determined according to the alarming mechanism of each flow point and path information of the service corresponding to the PTN or the IPRAN on the flow points,
wherein the path information is identification of the working path and/or the protection paths of each flow point in the flow point model through which the service corresponding to the PTN or the IPRAN is intended to pass .

In the solution, the method further includes that:
optimal path information of the service corresponding to the PTN or the IPRAN is determined according to the switching decision making method, and the optimal path information is output, wherein
the optimal path information is effective path information by which the service is intended to pass through each flow point in the flow point model.

In the solution, the method further includes that:
working instruction information or protection instruction information of each flow point in the flow point model is determined according to the effective path information,
wherein the working instruction information is instruction information of selecting the working path for passing when the service corresponding to the PTN or the IPRAN passes through the flow point; and
the protection instruction information is instruction information of selecting the protection path for passing when the service corresponding to the PTN or the IPRAN passes through the flow point.

In the solution, the step that the switching decision making method for the service corresponding to the PTN or the IPRAN is determined according to the alarming mechanism of each flow point and the path information of the service corresponding to the PTN or the IPRAN on the flow points includes that:
path information by which the service corresponding to the PTN or the IPRAN passes through one flow point is determined according to the alarming mechanism of each flow point in the flow point model and the path information of the service corresponding to the PTN or the IPRAN on the flow points, and optimal path information by which the service corresponding to the PTN or the IPRAN passes through all the flow points is determined according to the path information by which the service corresponding to the PTN or the IPRAN passes through each flow point; or,
optimal path information by which the service corresponding to the PTN or the IPRAN is intended to pass through all the flow points is determined according to the alarming mechanism of each flow point in the flow point model and the path information of the service corresponding to the PTN or the IPRAN on the flow points.

Here, for linear protection or ring network protection, the switching decision making method may be determined by switching decision making based on an APS protocol such as G.8131 and G.8132; and for protection of FRR and the like in the IPRAN, the switching decision making method may be determined on the basis of the alarming mechanisms in Step 101C.

Wherein, a switching decision making result may perform path switching according to two manners, so that the optimal path information is determined. Output of the switching decision making result is explained with the N-layer flow point model as an example.

The first manner is a hierarchical switching manner, that is, the service is switched layer by layer according to a topology structure of the N-layer flow point model.

Specifically, the path information by which the service corresponding to the PTN or the IPRAN passes through one flow point is determined according to the alarming mechanism of each flow point and the path information of the service corresponding to the PTN or the IPRAN on the flow points. For example, for a flow point A in the flow points of the N-th layer, whether the service corresponding to the PTN or the IPRAN selects a working path or protection path corresponding to the flow point A is determined, for example, the working path of the service corresponding to the PTN or the IPRAN and passing through the flow point A is determined according to a practical condition, and by parity of reasoning, the path information by which the service corresponding to the PTN or the IPRAN is intended to pass through each flow point is determined layer by layer, and the optimal path information by which the service corresponding to the PTN or the IPRAN passes through all the flow points is determined.

The second manner is a flat switching manner.

Specifically, a starting flow point is determined as a flow point which bears the service. Starting flow points of different services may be located in different layers. For any service A, if a topology structure of an N-layer flow point model is established, at most N-1 layers of protection may be arranged from flow points of an N-th layer with a starting flow point of the service A. Since each flow point has a protection path and a working path, there exist at most 2^{N-1} paths for selection on flow points of a first layer. If path information by which the flow points of the first layer are reached through the working paths of flow points of each layer is numbered to be 0, each piece of path information numbered from 0 to 2^{N-1} reflects a protection switching manner of the starting flow point in the topology structure of the N-layer flow point model. For facilitating citation later, these numbers are temporally defined as a bitmap.

Furthermore, after a bitmap of the starting flow point is generated, selection of service path not only depends on a protection switching manner determined in the topology structure of the N-layer flow point model, but the selection of service path may also be externally controlled directly. For example, for a common Make Before Break (MBB) flow in the IPRAN, the service may be switched into a standby bitmap in advance during route re-optimization in a protection-free scenario, and after the route re-optimization is ended, the bitmap is directly updated, the service is switched back, so that non-destructive switching is implemented.

In the solution, the method further includes that:
OAM information is arranged to the working path and protection path of each flow point according to the hierarchically distributed structure of the flow points of each layer in the flow point model, to determine an OAM label of the working path or protection path of each flow point through which the service corresponding to the PTN or the IPRAN passes according to the OAM information.

In the solution, the method further includes that:
unique identification of the working path of the service corresponding to the PTN or the IPRAN on each flow point in the flow point model is determined, unique identification of the protection path of the service corresponding to the PTN or the IPRAN on each flow point is determined, and the unique identification of the working path and the unique identification of the protection path corresponding to each flow point are determined as OAM labels corresponding to each path.

Here, the embodiment of the disclosure further provides establishment of label processing mechanism before and after switching.

At first, the unique identification of the working path of the service corresponding to the PTN or the IPRAN on each flow point is determined, the unique identification of the protection path of the service corresponding to the PTN or the IPRAN on each flow point is determined, and the unique identification of the working path and the unique identification of the protection path corresponding to each flow point are determined as the OAM labels corresponding to each path, so that an OAM label may uniquely indicate one path. Then, the OAM information is arranged to the working path and protection path of each flow point according to the hierarchically distributed structure of the flow points of each layer, and when OAM mechanism passes through a specific path corresponding to a certain specific flow point, for example, passing through the flow point C, wherein a previous flow point corresponding to the flow point C is the flow point B and a path from the flow point B to the flow point C is a path A, the service A corresponding to the PTN or the IPRAN reaches the flow point C after passing through the path A. Next, it is determined that the service A selects a protection path B of the flow point C at the flow point C according to instruction information of the flow point C, and at this moment, when the OAM mechanism passes through the path B, a unique OAM label corresponding to the path B is selected to be encapsulated, and identification information of a previous path of the service A when passing through the flow point C and identification information of the current path are presented in OAM information corresponding to the path B, i.e. an OAM identification of the path A and an OAM identification of the protection path B in the embodiment, so that the OAM identification information of the previous path is recorded in the OAM information corresponding to the path B. If the service A is switched at the flow point C, since the identification of the previous path is recorded in the OAM information, that is, the identification of the path before switching is recorded, the OAM label mechanism of the embodiment may facilitate detection of a technician over path conditions before and after switching.

Specifically, the unique identification of the working path of the service corresponding to the PTN or the IPRAN on each flow point is determined, and the unique identification of the protection path of the service corresponding to the PTN or the IPRAN on each flow point is determined. Here, the unique identification is the OAM label, and moreover, the OAM label may be allocated according to the OAM information in own paths. When the OAM mechanism sends a packet through the flow points of each layer, current effective path, i.e. the working paths or protection paths, of the flow points are determined at first, the OAM mechanism selects to encapsulate the OAM labels corresponding to the working paths if the current effective paths are the working paths, and the OAM mechanism selects to encapsulate the OAM labels corresponding to the protection paths if the current effective paths are the protection paths. Therefore, when the OAM mechanism passes through the flow points of each layer, OAM labels selected by the flow points of the client layers corresponding to the flow points are all carried to the service layers, and optimal path encapsulation information of all the layers may finally be obtained on the flow points of the first layer. Wherein selection mechanism for the effective paths is automatically updated according to the switching decision making method.

It is important to note that the OAM information is arranged to the working path and protection path of each flow point according to the topology structure of the N-layer flow point model, wherein the OAM information is sent according to a configuration period, and moreover, the encapsulated OAM information of the next layer (or the previous layer) is obtained layer by layer according to the OAM information from the topology structure of the N-layer flow point model, wherein the OAM labels of the paths of the flow points through which the service passes are all recorded in the OAM information of each layer, and then, the obtained OAM information of the next layer (or the previous layer) is encapsulated with the OAM information of this layer for sending.

Here, the OAM labels in the OAM information may change before and after path switching, so that it is necessary to define the OAM label operations in the OAM information of the working paths and protection paths of the flow points of each layer as follows.

Independent label processing operations may be set on the working path and protection path of each flow point in the flow points of the first layer, the flow points of the second layer and up to the flow points of the Nth layer, for example, not encapsulating, encapsulating labels of a layer, switching labels of a layer and switching and encapsulating labels of a layer respectively. For example, for the PTN, a layer of PW labels is usually encapsulated in a Virtual Channel (VC) layer, a layer of tunnel labels is encapsulated in a Virtual Path (VP) layer, and if ordinary ring network protection is arranged, labels of ring network working paths are not encapsulated; and the original tunnel labels of the ring network protection paths are replaced. For the IPRAN, labels or empty labels (i.e. not encapsulating or encapsulating labels 0) are encapsulated on a VPN and an LDP respectively, and for TE FRR protection, a layer of FRR labels is added on TE protection paths, and meanwhile, TE tunnel labels may be replaced. In such a manner, the four conditions of not encapsulating, encapsulating labels of a layer, switching labels of a layer and switching and encapsulating labels of a layer respectively may be summarized.

Here, definition of the layers and label operations may be prearranged according to a specific service scenario.

Here, in the embodiment of the disclosure, the hierarchical flow point topology structure is determined at first, the working path or protection path of each flow point, i.e. a hierarchical protection structure, is determined according to the hierarchical flow point topology structure and the preset rule, and then the alarming mechanism of each flow point is determined according to the hierarchical flow point topology structure and the hierarchical protection structure, to further determine a failure condition of the working path or protection path corresponding to each flow point according to the alarming mechanism and determine the effective path through which the service corresponding to the PTN or the IPRAN passes through each flow point according to the failure condition of the working path or protection path corresponding to each flow point, i.e. the switching decision making method, to further determine an optimal path of the service corresponding to the PTN or the IPRAN. Wherein, before the switching decision making method is determined, each flow point has own corresponding initial effective path, which may be the working path or the protection path, in the current state, and after the switching decision making method is determined, the effective path of each flow point may be updated according to a practical path condition in the embodiment of the disclosure.

The network protection switching method and network device of the embodiment of the disclosure may unify path switching decision making methods for services corresponding to the PTN and the IPRAN through a unified flow point model and protection model, and moreover, the path switching decision making method for the services corresponding to the PTN and the IPRAN may be clearly and completely determined according to the hierarchical flow point structure, the protection paths set in each flow point and the alarming mechanism of each flow point in the embodiment of the disclosure. Therefore, adopting the embodiment of the disclosure may reduce design complexity and design cost of path protection and path selection and shorten a development period, and may further lay a foundation for improving reliability, extensibility, switching performance and the like of a device adopting the method of the embodiments of the disclosure.

In order to implement the method, the embodiment of the disclosure further provides a network device. As shown in Fig. 2, the device includes:
a modelling unit 21, arranged to determine a hierarchically distributed flow point model according to all ports corresponding to a PTN or an IPRAN or physical ports or a physical port set in a physical connection channel layer; and
a decision making unit 22, arranged to determine a switching decision making method for a service corresponding to the PTN or the IPRAN according to the flow point model.

In the solution, the modelling unit is further arranged to determine all the ports corresponding to the PTN or the IPRAN or the physical ports or a physical port set in the physical connection channel layer as flow points of a first layer, determine flow points of a next layer according to the flow points of the first layer and a first preset rule, and determine the hierarchically distributed flow point model.

In the solution, the device further includes:
a path unit 23, arranged to determine working paths or the working paths and protection paths of the service corresponding to the PTN or the IPRAN on the flow points in the flow point model according to a second preset rule; and
an alarming unit 24, arranged to determine alarming mechanism of each flow point according to a hierarchically distributed structure of the flow points of each layer in the flow point model.

In the solution, the decision making unit 24 is further arranged to determine the switching decision making method for the service corresponding to the PTN or the IPRAN according to the alarming mechanism of each flow point and path information of the service corresponding to the PTN or the IPRAN on the flow points,
wherein the path information is identification of the working path and/or the protection paths through which the service corresponding to the PTN or the IPRAN is intended to pass through each flow point in the flow point model.

In the solution, the decision making unit 24 is further arranged to determine path information by which the service corresponding to the PTN or the IPRAN passes through one flow point according to the alarming mechanism of each flow point in the flow point model and the path information of the service corresponding to the PTN or the IPRAN on the flow points, and determine optimal path information by which the service corresponding to the PTN or the IPRAN passes through all the flow points according to the path information by which the service corresponding to the PTN or the IPRAN passes through each flow point; or,
determine optimal path information by which the service corresponding to the PTN or the IPRAN is intended to pass through all the flow points according to the alarming mechanism of each flow point in the flow point model and the path information of the service corresponding to the PTN or the IPRAN on the flow points.

In the solution, the device further includes:
a first determination unit, arranged to determine optimal path information of the service corresponding to the PTN or the IPRAN according to the switching decision making method, and output the optimal path information, wherein
the optimal path information is effective path information by which the service is intended to pass through each flow point in the flow point model.

In the solution, the device further includes:
a second determination unit, arranged to determine working instruction information or protection instruction information of each flow point in the flow point model according to the effective path information,
wherein the working instruction information is instruction information of selecting the working path for passing when the service corresponding to the PTN or the IPRAN passes through the flow point; and
the protection instruction information is instruction information of selecting the protection path for passing when the service corresponding to the PTN or the IPRAN passes through the flow point.

In the solution, the device further includes:
a label unit 25, arranged to configure OAM information to the working path and protection path of each flow point according to the hierarchically distributed structure of the flow points of each layer in the flow point model, to determine an OAM label of the working path or protection path of each flow point through which the service corresponding to the PTN or the IPRAN passes according to the OAM information.

In the solution, the label unit is further arranged to determine unique identification of the working path of the service corresponding to the PTN or the IPRAN on each flow point in the flow point model, determine unique identification of the protection path of the service corresponding to the PTN or the IPRAN on each flow point, and determine the unique identification of the working path and the unique identification of the protection path corresponding to each flow point as an OAM label corresponding to each path.

In the solution, the modelling unit is further arranged to determine that client layers of the flow points of the first layer are own corresponding flow points of the next layer; determine that the flow points of the first layer have no service layers, or, the service layers of the flow points of the first layer are the ports corresponding to the PTN or the IPRAN; and determine that the service corresponding to the PTN or the IPRAN on each flow point in the flow points of the first layer has one working path, or has one working path and one protection path.

In the solution, the modelling unit is further arranged to, when it is determined that there are flow points of an N-layer structure according to a service type corresponding to the PTN or the IPRAN and the first preset rule, determine that flow points of an i-th layer are client layers of flow points of an (i-1)-th layer, determine that the service corresponding to the PTN or the IPRAN on each flow point in the flow points of the i-th layer has one working path, or has one working path and one protection path, determine that client layers of the flow points of the i-th layer are flow points of an (i+1)-th layer, or is a user service of this layer, and determine that service layers of the flow points of the i-th layer are the flow points of the (i-1)-th layer; and
when i is equal to N, determine that client layers of flow points of an N-th layer are the user service of this layer,
wherein N is a positive integer greater than or equal to 2, and i is a positive integer greater than or equal to 2 and less than or equal to N.

In the solution, when it is determined that there are flow points of the N-layer structure according to the service type corresponding to the PTN or the IPRAN and the first preset rule, the alarming unit is further arranged to determine that alarming information of each flow point in the flow points of the first layer is sourced from alarming information generated by physical ports corresponding to the PTN or the IPRAN, or alarming information generated by corresponding TMS OAM in the physical connection channel layer; and
determine that alarming information of each flow point in the flow points of the i-th layer is sourced from alarming information generated by OAM or service layers of this layer,
wherein i is a positive integer greater than or equal to 2 and less than or equal to N.

Here, the network device may be a PTN device or an IPRAN device, wherein the modelling unit, the decision making unit, the path unit, the alarming unit, the first determination unit, the second determination unit and the label unit may all run on a computer, and may be implemented by a Central Processing Unit (CPU), or Micro Processing Unit (MPU), or Digital Signal Processor (DSP), or Field-Programmable Gate Array (FPGA) located on the computer.

The embodiment of the disclosure further provides a computer-readable storage medium, in which a computer-executable instruction is stored, the computer-executable instruction being arranged for the network protection switching method shown in Fig. 1.

In order to implement the method, the embodiment of the disclosure further provides a network device, which includes:
modelling processing means, arranged to determine a hierarchically distributed flow point model according to all ports corresponding to a PTN or an IPRAN or physical ports or a physical port set in a physical connection channel layer; and
decision making processing means, arranged to determine a switching decision making method for a service corresponding to the PTN or the IPRAN according to the flow point model.

In the solution, the modelling processing means is further arranged to determine all the ports corresponding to the PTN or the IPRAN or the physical ports or a physical port set in the physical connection channel layer as flow points of a first layer, determine flow points of a next layer according to the flow points of the first layer and a first preset rule, and determine the hierarchically distributed flow point model.

In the solution, the device further includes:
path processing means, arranged to determine working paths or the working paths and protection paths of the service corresponding to the PTN or the IPRAN on the flow points in the flow point model according to a second preset rule; and
alarming processing means, arranged to determine alarming mechanism of each flow point according to a hierarchically distributed structure of the flow points of each layer in the flow point model.

In the solution, the decision making processing means is further arranged to determine the switching decision making method for the service corresponding to the PTN or the IPRAN according to the alarming mechanism of each flow point and path information of the service corresponding to the PTN or the IPRAN on the flow points,
wherein the path information is identification of the working path and/or the protection paths through which the service corresponding to the PTN or the IPRAN is intended to pass through each flow point in the flow point model.

In the solution, the decision making processing means is further arranged to determine path information by which the service corresponding to the PTN or the IPRAN passes through one flow point according to the alarming mechanism of each flow point in the flow point model and the path information of the service corresponding to the PTN or the IPRAN on the flow points, and determine optimal path information by which the service corresponding to the PTN or the IPRAN passes through all the flow points according to the path information by which the service corresponding to the PTN or the IPRAN passes through each flow point; or,
determine optimal path information by which the service corresponding to the PTN or the IPRAN is intended to pass through all the flow points according to the alarming mechanism of each flow point in the flow point model and the path information of the service corresponding to the PTN or the IPRAN on the flow points.

In the solution, the device further includes:
first processing means, arranged to determine optimal path information of the service corresponding to the PTN or the IPRAN according to the switching decision making method, and output the optimal path information, wherein
the optimal path information is effective path information by which the service is intended to pass through each flow point in the flow point model.

In the solution, the device further includes:
second processing means, arranged to determine working instruction information or protection instruction information of each flow point in the flow point model according to the effective path information,
wherein the working instruction information is instruction information of selecting the working path for passing when the service corresponding to the PTN or the IPRAN passes through the flow point; and
the protection instruction information is instruction information of selecting the protection path for passing when the service corresponding to the PTN or the IPRAN passes through the flow point.

In the solution, the device further includes:
label processing means, arranged to configure OAM information to the working path and protection path of each flow point according to the hierarchically distributed structure of the flow points of each layer in the flow point model, to determine an OAM label of the working path or protection path of each flow point through which the service corresponding to the PTN or the IPRAN passes according to the OAM information.

In the solution, the label processing means is further arranged to determine unique identification of the working path of the service corresponding to the PTN or the IPRAN on each flow point in the flow point model, determine unique identification of the protection path of the service corresponding to the PTN or the IPRAN on each flow point, and determine the unique identification of the working path and the unique identification of the protection path corresponding to each flow point as an OAM label corresponding to each path.

In the solution, the modelling processing means is further arranged to determine that client layers of the flow points of the first layer are own corresponding flow points of the next layer; determine that the flow points of the first layer have no service layers, or, the service layers of the flow points of the first layer are the ports corresponding to the PTN or the IPRAN; and determine that the service corresponding to the PTN or the IPRAN on each flow point in the flow points of the first layer has one working path, or has one working path and one protection path.

In the solution, the modelling processing means is further arranged to, when it is determined that there are flow points of an N-layer structure according to a service type corresponding to the PTN or the IPRAN and the first preset rule, determine that flow points of an i-th layer are client layers of flow points of an (i-1)-th layer, determine that the service corresponding to the PTN or the IPRAN on each flow point in the flow points of the i-th layer has one working path, or has one working path and one protection path, determine that client layers of the flow points of the i-th layer are flow points of an (i+1)-th layer, or is a user service of this layer, and determine that service layers of the flow points of the i-th layer are the flow points of the (i-1)-th layer; and
when i is equal to N, determine that client layers of flow points of an Nth layer are the user service of this layer,
wherein N is a positive integer greater than or equal to 2, and i is a positive integer greater than or equal to 2 and less than or equal to N.

In the solution, when it is determined that there are flow points of the N-layer structure according to the service type corresponding to the PTN or the IPRAN and the first preset rule, the alarming processing means is further arranged to determine that alarming information of each flow point in the flow points of the first layer is sourced from alarming information generated by physical ports corresponding to the PTN or the IPRAN, or alarming information generated by corresponding TMS OAM in the physical connection channel layer; and
determine that alarming information of each flow point in the flow points of the i-th layer is sourced from alarming information generated by OAM or service layers of this layer,
wherein i is a positive integer greater than or equal to 2 and less than or equal to N.

Here, the network device may be a PTN device or an IPRAN device, wherein functions of the modelling processing device, the decision making processing device, the path processing device, the alarming processing device, the first processing device, the second processing device and the label processing device may all be realized by a processor in the PTN device or the IPRAN device, or by an integrated circuit chip or FPGA on the PTN device or the IPRAN device.

### Embodiment 2

According to a conventional art, due to a difference of protocol standard principles, an MPLS-TP-based PTN static protection module and MPLS/IP-based IPRAN dynamic protection module on a device are usually modules which are independent respectively. In the embodiment of the disclosure, service protection scenarios of a PTN and an IPRAN may be unified by two typical networks. The method of the embodiment of the disclosure will be further explained below with reference to specific embodiments in detail.

As shown in Fig. 3, a data service corresponding to a PTN is arranged on a device 1 to establish protection for PWs, wherein a label of a working PW is 100, and OAM1 information is arranged on the PW with the label 100; a label of a protection PW is 101, and OAM4 information is arranged on the protection PW with the label 101; a label of a tunnel which bears the protection PW 101 is 202, and OAM5 information is arranged on the tunnel with the label 202; a label of a working tunnel which bears the working PW 100 is 200, and OAM2 information is arranged on the working tunnel with the label 200; and a label of a protection tunnel which bears the working PW 100 is 201, and OAM3 information is arranged on the protection tunnel with the label 201.

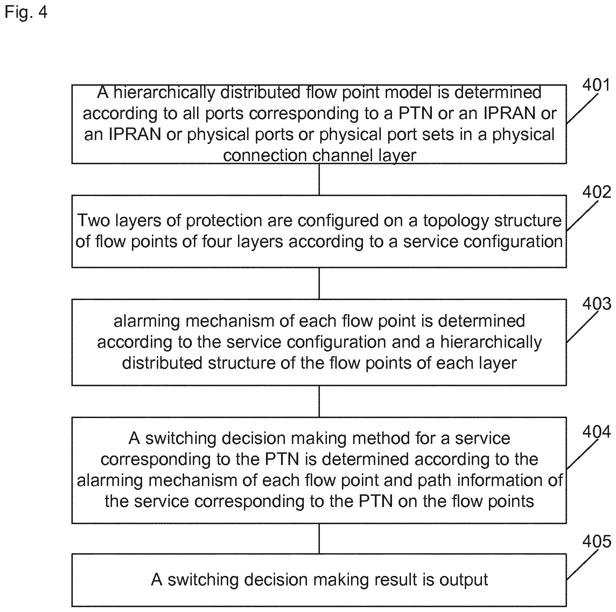

Fig. 4 is a flowchart of specific implementation according to embodiment 2 of the disclosure, i.e. an implementation flowchart of determining a switching decision making method by adopting a network protection switching method of the embodiment of the disclosure under a background shown in Fig. 3. As shown in Fig. 4, the method includes the following steps.

Step 401: a hierarchically distributed flow point model is determined according to all ports corresponding to a PTN or an IPRAN or an IPRAN or physical ports or a physical port set in a physical connection channel layer.

### Specifically,

VS flow points of a first layer are determined. The VS flow points of the first layer are all ports in VS and TMS entities. Each flow point in the flow points of the first layer is a bidirectional, and may be an ingress flow point or an egress flow point. The VS flow points of the first layer may be used on Network-to-Network Interface (NNI) sides of a node (Provider Edge (PE) node) where the device 1 and a device 2 are located and a node (P node) where a device 3 is located. Moreover, each flow point in the flow points of the first layer has only one working path, and VS OAM, peer BFD or link BFD information may be enabled on the path of the flow point as alarming information, client layers of the flow points of the first layer are VS-VP flow points, and service layers of the flow points of the first layer are corresponding physical ports in the VS and TMS entities.

VS-VP flow points of a second layer are determined, wherein, for the PTN, the VS-VP flow points of the second layer represent virtual flow points when TMS protection acts on the VP layer, and have no corresponding entities, such as ordinary and shared ring network protection. For the IPRAN, the VS-VP flow points of the second layer represent entity flow points acting on TE FRR and TE HSB protection. Each flow point in the VS-VP flow points of the second layer is bidirectional, including an ingress direction and an egress direction respectively. The VS-VP flow points of the second layer may be used on the NNI sides of the PE and P nodes. Each flow point in the VS-VP flow points of the second layer has two paths, and for the PTN, the two paths are an LSP working TMS path and an LSP Wrapping/Steering protection path respectively. For the IPRAN, the two paths are a TE FRR or TE HSB working path and a TE FRR or TE HSB protection path respectively. For the entity flow points, OAM information may be enabled on the paths of the flow points as alarming information, such as TE tunnel BFD information. For the virtual flow points, alarms of service layers of this layer, i.e. the VS flow points of the first layer, are required to be adopted to trigger switching. Client layers of the VS-VP flow points of the second layer are VP flow points of a third layer, and the service layers of the VS-VP flow points of the second layer are the VS flow points of the first layer.

The VP flow points of the third layer are determined, and the VP flow points of the third layer represent tunnel entities. Specifically, for the PTN, the VP flow points of the third layer represent LSP tunnel entities. For the IPRAN, the VP flow points of the third layer represent LDP and TE tunnels or IP entities. Each flow point in the VP flow points of the third layer is bidirectional, including the ingress direction and the egress direction respectively. The VP flow points of the third layer may be used on the NNI sides of the PE and P nodes. Each flow point in the VP flow points of the third layer has two paths, i.e. a working path and a protection path respectively. For the PTN, the protection paths may enable tunnel 1+1/1:1 protection. For the IPRAN, the protection paths may enable LDP FRR and IP FRR protection. For the PTN, TMP OAM information may be enabled on both the protection paths and the working paths. For the IPRAN, LSP BFD information may be enabled on both the protection paths and the working paths. Client layers of the VP flow points of the third layer are VC flow points of a fourth layer, and service layers of the VP flow points of the third layer are the VS-VP flow points.

The VC flow points of the fourth layer are determined. For a Layer-2 Virtual Private Network (L2VPN), the VC flow points of the fourth layer represent PW entities (dynamic entities or static entities). The VC flow points of the fourth layer corresponding to the PWs may enable PW1+1/1:1 protection as protection paths. Here, each flow point in the VC flow points of the fourth layer has two paths, i.e. a working path and a protection path, and moreover, PW OAM information may be enabled on both paths. For a Layer-3 Virtual Private Network (L3VPN), the VC flow points of the fourth layer represent VRF Peer PEs, and have no entities. The VC flow points of the fourth layer corresponding to the VRF Peer PEs may enable VPN FRR protection as protection paths. Here, each VC flow point of the fourth layer has two paths, i.e. a VRF working path and a VPN FRR protection path, and OAM may not be enabled on the flow point, so that each flow point in the VC flow points of the fourth layer is associated with BGP Peer BFD or service layer alarms to trigger protection switching. Each flow point in the VC flow points of the fourth layer is bidirectional, including the ingress direction and the egress direction respectively. The VC flow points of the fourth layer may be used on the NNI sides of the PE and P nodes. Client layers of the VC flow points of the fourth layer are the service corresponding to this layer, and service layers of the VC flow points of the fourth layer are the VP flow points of the third layer.

Here, Table 1 is a topology table for path establishment of ingress flow points, and Table 2 is a topology table for path establishment of egress flow points.

Step 402: two layers of protection are arranged on a topology structure of flow points of four layers according to a service configuration.

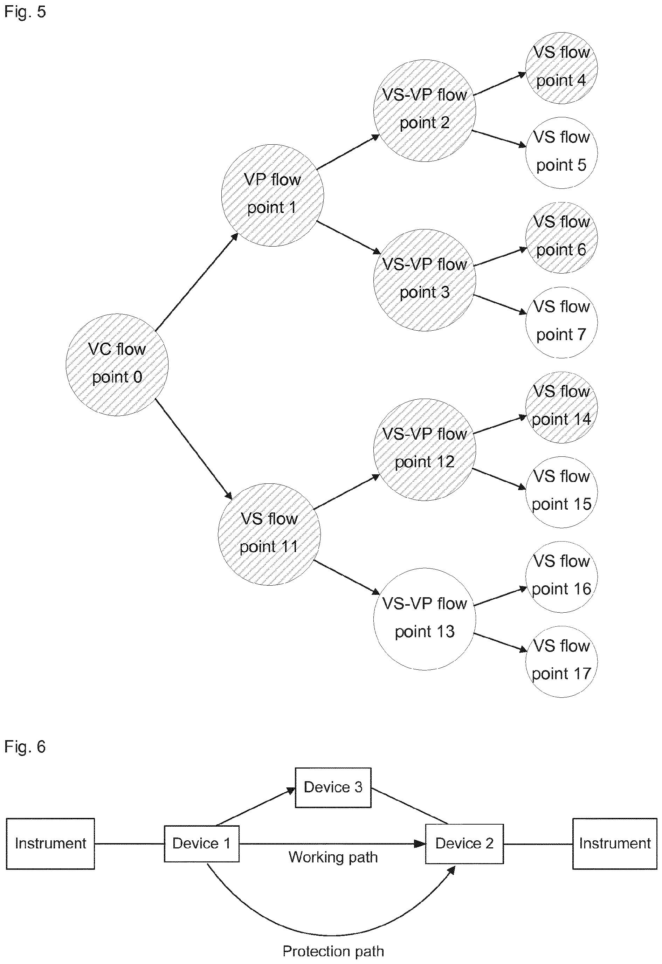

Wherein, Fig. 5 is a topological diagram of flow points of four layers according to embodiment 2 of the disclosure. As shown in Fig. 5, the VS flow points of the first layer include: a VS flow point 4, a VS flow point 5, a VS flow point 6, a VS flow point 7, a VS flow point 14, a VS flow point 15, a VS flow point 16 and a VS flow point 17. The VS-VP flow points of the second layer include: a VS-VP flow point 2, a VS-VP flow point 3, a VS-VP flow point 12 and a VS-VP flow point 13. The VP flow points of the third layer include: a VP flow point 1 and a VP flow point 11. The VC flow points of the fourth layer include a VC flow point 0.

Specifically, the first layer of LSP protection acts on the VP flow points of the third layer, that is, a working line and a protection line are arranged on each flow point in the VP flow points of the third layer. As shown in Fig. 5, the VP flow point 1 in the VP flow points of the third layer has one working path pointing to the VS-VP flow point 2 in the VS-VP flow points of the second layer, and one protection path pointing to the VS-VP flow point 3 in the VS-VP flow points of the second layer, and moreover, working paths of both the VS-VP flow point 2 and the VS-VP flow point 3 point to flow points connected with physical interfaces, i.e. the VS flow point 4 and VS flow point 6 in the VS flow points of the first layer respectively. Therefore, the VP flow point 1 is a protection group, i.e. the first layer of LSP protection in the embodiment.

The second layer of PW protection acts on the VC flow points of the fourth layer, that is, one working line and one protection line are arranged on each flow point in the VC flow points of the fourth layer. As shown in Fig. 5, the VC flow point 0 in the VC flow points of the fourth layer has one working path pointing to the VP flow point 1, and one protection path pointing to the VP flow point 11. The VP flow point 1 has two paths which may both lead to flow points connected with physical ports, i.e. flowing to the VS-VP flow point 2 and finally to the VS flow point 4 from the VP flow point 1 and flowing to the VS-VP flow point 3 and finally to the VS flow point 6 from the VP flow point 1 respectively, wherein the VS flow point 4 is connected with a physical port 5/1, and the VS flow point 6 is connected with a physical port 5/3. Here, the flow points represented by grey circles in the VS flow points of the first layer in Fig. 5 are the flow points connected with the physical ports. Therefore, the VC flow point 0 in the VC flow points is also a protection group, i.e. the second layer of PW protection in the embodiment. In such a manner, the two layers of protection are determined.

Table 3 is a table of association between a protection group and a flow point. As shown in Table 3,

**Table 3**

| Protection group number | Ingress flow point number | Egress flow point number | Protection group type | holdoff |
|---|---|---|---|---|
| 1 | 0 | 0 | 1:1 | 50ms |
| 2 | 1 | 1 | 1:1 | None |

Step 403: alarming mechanism of each flow point is determined according to the service configuration and a hierarchically distributed structure of the flow points of each layer.

Alarming detection is associated with topology of the ingress flow points, and includes OAM detection of this layer and service layer flow point reproduction, as shown in Table 1. OAM packet sending is associated on the paths of the egress flow points, including label and service layer flow point relationship mapping, as shown in Table 2. Wherein, Table 1 is an ingress flow point table, and with reference to Table 1 and Fig. 5, it may be seen that the flow points with the flow point numbers 4, 6 and 11 are the flow points in the VS flow points of the first layer, each flow point in the VS flow points of the first layer only has a working path, and the working paths of the flow points 4, 6 and 11 correspond to the physical port 5/1, the physical port 5/3 and a physical port 5/4 respectively. Moreover, each flow point in the VS flow points of the first layer has no protection path, and namely has no protection group. The flow points with the flow point numbers 2, 3 and 12 are flow points in the VS-VP flow points of the second layer, and corresponding service layers are flow points with the flow point numbers 4, 6 and 14 respectively, that is, service layers corresponding to the flow point 2, flow point 3 and flow point 12 in the VS-VP flow points of the second layer are the flow point 4, flow point 6 and flow point 14 in the VS flow points of the first layer. Here, each flow point corresponding to the flow point 13 in the VS flow points of the first layer does not corresponds to any physical port, that is, the flow point 13 has no service layer, so that the flow point 13 may not serve as a protection group. The flow points with the flow point numbers 1 and 11 are flow points in the VP flow points of the third layer, wherein the flow point 1 has a protection group, that is, the flow point 1 has both a working path and a protection path, the working path of the flow point 1 corresponds to the flow point 2, and the protection path corresponds to the flow point 3, that is, the service layers corresponding to the flow point 1 are the flow point 2 and the flow point 3 respectively, the flow point 2 and the flow point 3 correspond to the flow point 4 and flow point 4 in the VS flow points of the first layer respectively, and moreover, the flow point 4 and the flow point 5 are both connected with physical ports. Therefore, it is indicated that the flow point 1 has a protection group. Similarly, the flow point 11 has no protection group because only the flow point 12 corresponding to the working path of the flow point 11 has a service layer, that is, the flow point 13 corresponding to the protection path of the flow point 11 has no service layer, that is, both the flow point 16 and flow point 17 corresponding to the flow point 13 in the VS flow points of the first layer do not correspond to any physical ports. Therefore, the flow point 12 has no service layer. The flow point with the number 0 is a flow point in the VC flow points of the first layer, the flow point 0 has a protection group, and service layers are the flow point 1 and flow point 11 in the VP flow points of the third layer respectively. Table 2 is an egress flow point table, and its topological relationship is similar to Table 1, and will not be elaborated.

**Table 1**

| Flow point number | Flow point type | Path | Path selection before switching | Path selection after switching | OAM number of this layer | Service layer flow point number |
|---|---|---|---|---|---|---|
| 0 | VC flow point | Working path | Effective | Effective | 1 | 1 |
| | | Protection path | Ineffective | Ineffective | 4 | 11 |
| 1 | VP flow point | Working path | Effective | Ineffective | 2 | 2 |
| | | Protection path | Ineffective | Effective | 3 | 3 |
| 11 | VP flow point | Working path | Effective | Effective | 5 | 12 |
| | | Protection path | Ineffective | Ineffective | None | None |
| 2 | VS-VP flow point | Working path | Effective | Effective | None | 4 |
| | | Protection path | Ineffective | Ineffective | None | None |
| 3 | VS-VP flow point | Working path | Effective | Effective | None | 6 |
| | | Protection path | Ineffective | Ineffective | None | None |
| 12 | VS-VP flow point | Working path | Effective | Effective | None | 14 |
| | | Protection path | Ineffective | Ineffective | None | None |
| 4 | VS flow point | Working path | Effective | Effective | None | Physical port 5/1 |
| 6 | VS flow point | Working path | Effective | Effective | None | Physical port 5/3 |
| 14 | VS flow point | Working path | Effective | Effective | None | Physical port 5/4 |

**Table 2**

| Flow point number | Flow point type | Path | Path selection before switching | Path selection after switching | Tunnel label | OAM number of this layer | Service layer flow point number |
|---|---|---|---|---|---|---|---|
| 0 | VC flow point | Working path | Effective | Effective | 100 | 1 | 1 |
| | | Protection path | Ineffective | Ineffective | 101 | 4 | 11 |
| 1 | VP flow point | Working path | Effective | Ineffective | 200 | 2 | 2 |
| | | Protection path | Ineffective | Effective | 201 | 3 | 3 |
| 11 | VP flow point | Working path | Effective | Effective | 202 | 5 | 12 |
| | | Protection path | Ineffective | Ineffective | None | None | None |
| 2 | VS-VP flow point | Working path | Effective | Effective | None | None | 4 |
| | | Protection path | Ineffective | Ineffective | None | None | None |
| 3 | VS-VP flow point | Working path | Effective | Effective | None | None | 6 |
| | | Protection path | Ineffective | Ineffective | None | None | None |
| 12 | VS-VP flow point | Working path | Effective | Effective | None | None | 14 |
| | | Protection path | Ineffective | Ineffective | None | None | None |
| 4 | VS flow point | Working path | Effective | Effective | None | None | Physical port 5/1 |
| 6 | VS flow point | Working path | Effective | Effective | None | None | Physical port 5/3 |
| 14 | VS flow point | Working path | Effective | Effective | None | None | Physical port 5/4 |

By the above three steps, the topology structure of the flow points of the four layers, i.e. the flow point topology structure of the service, may be established, as shown in Fig. 5. For the flow points of the four layers, the protection paths are set on the VP flow points of the third layer, and the protection paths are set on the VC flow points of the fourth layer, that is, the two layers of protection are formed, and the two layers of protection may be two layers of protection formed by superimposing PW 1:1 and LSP 1:1, so that there are totally 8 paths, i.e. 8 bitmaps, for selection from the VC flow points of the fourth layer to the VS flow points of the first layer. For a layer without a protection configuration, the working paths are adopted as a default. It may be clearly seen from a four-layer flow point model that alarms of the paths of the VP ingress flow points are sourced from OAM of this layer and alarms of the paths of the VC ingress flow points are sourced from OAM of this layer and alarms of service layers. Furthermore, the service layer of the working path of the VC flow point 0 has LSP protection, an alarm is sourced from an alarm of a current effective path in the service layer. For the VC egress flow points, there are two encapsulation manners for OAM1 on the working paths on the VP flow points: working labels or protection labels of the VP flow points are encapsulated. There is only one encapsulation manner for the other OAM.

The flow point model is established upwards from the flow points of the first layer, and is namely established upwards layer by layer from the flow points of the first layer until a structure of flow points of an N-th layer is established according to a preset rule. Moreover, in the example, only three flow points in the VS flow points of the first layer correspond to the physical ports, that is, in the VS flow points of the first layer in Fig. 4, the flow points represented by grey circles correspond to the physical ports. That is, the flow points represented by the grey circles in the flow points of the first layer, i.e. the VS flow point 4, the VS flow point 6 and the VS flow point 14, correspond to entities, and namely correspond to the physical ports, while the other flow points in the VS flow points of the first layer, i.e. the VS flow point 5, the VS flow point 7, the VS flow point 15, the VS flow point 16 and the VS flow point 17, all do not correspond to the physical ports,namely have no service layer entities, and the paths of the VS flow point 5, the VS flow point 7, the VS flow point 15, the VS flow point 16 and the VS flow point 17 are considered to be ineffective. Therefore, there are three paths for a serving started from the VC egress flow point 0 to select, i.e. a path by which the service reaches the VS flow point 4 sequentially through the VP flow point 1 and the VS-VP flow point 2 from the VC flow point 0, the path being numbered as bitmap0; a path by which the service reaches the VS flow point 4 sequentially through the VP flow point 1 and the VS-VP flow point 3 from the VC flow point 0, the path being numbered as bitmap2; and a path by which the service reaches the VS flow point 14 sequentially through the VP flow point 11 and the VS-VP flow point 12 from the VC flow point 0, the path being numbered as bitmap4. It is supposed that a current effective path in the example is bitmap0.

Step 404: a switching decision making method for a service corresponding to the PTN is determined according to the alarming mechanism of each flow point and path information of the service corresponding to the PTN on the flow points.

For linear protection, the switching decision making method may be a G.8131-protocol-based decision making method. When the port 5/1 has a failure, LSP OAM2 has the unique egress port 5/1, an LOC alarm may be detected, a Signal Failure (SF) may be generated on the working path of the VS flow point 1 of the third layer, and a protection path is selected on a protection group 2 through G.8131 APS decision making mechanism; protection switching of the VP flow point of the third layer is completed; a topological relationship between current ingress and egress flow points is modified; for the OAM1 of the working path of the VC flow point of the fourth layer, if its detection time is shorter than a sum of detection time of the OAM2 and LSP protection switching time of the VP flow point of the third layer, LOC may also be generated, no SF is immediately generated by the VC flow point of the fourth layer when the LOC is generated, a holdoff timer is enabled instead, and after a switching operation of the VP flow point of the third layer is completed, the VC flow point of the fourth layer may not sense an alarm of the flow point of the service layer because the VP flow point of the third layer implements reproduction to the VC flow point of the client layer after a certain delay. The OAM1 of this VC layer encapsulates a label according to a new topological relationship, as shown in Fig. 5, that is, an LSP label is encapsulated on the VP flow point 1 of the third layer according to the protection path label 201, a message is finally sent from the port 5/3, and after the holdoff timer reaches 50ms, the LOC alarm has disappeared. Finally, switching is not performed on the VC flow point of the fourth layer.

After the failure is recovered, a Wait To Restore (WTR) flow is started for returning protection, and back switching is automatically performed after WTR time is reached.

Step 405: a switching decision making result is output.

Specifically, the switching decision making result is hierarchically output. Current path selection states of the ingress and egress flow points of each layer have been maintained in Table 1 and Table 2, so that it may be seen from the Table 1 and Table 2 that a hierarchical switching result in a receiving direction and a sending direction may be directly output in the example.

Or, the switching decision making result is flatly output. A starting flow point bitmap table 4 is maintained to obtain a flat switching decision making result, wherein Table 4 is a starting flow point bitmap maintenance table in embodiment 2. A specific process is that: all the starting flow points are periodically polled, Table 2 is iteratively looked up for each starting flow point to finally obtain a number of its current bitmap in the flow points of the first layer, and if the current bitmap is inconsistent with the historical bitmap, the starting flow point and the bitmap are output. In the embodiment, the starting flow point is 0, is located in the flow points of the fourth layer, and has totally 8 bitmaps. The initial bitmap is 0, and after VP switching, the bitmap is changed into 2.

**Table 4**

| Starting flow point number | Bitmap model | Historical bitmap | Current bitmap |
|---|---|---|---|
| 0 | N=4, 2³ paths | 0 | 2 |

When both the ports 5/1 and 5/3 have failures, according to the similar principle, for a bitmap of a service started from the VC flow point of the fourth layer, the current effective path bitmap4 as an optional path is automatically found according to the topology table after switching.

The final switching result may be notified to a switching execution module for service switching in form of message.

### Embodiment 3

Fig. 6 is a networking diagram of specific implementation according to embodiment 3 of the disclosure. As shown in Fig. 6, an L3VPN service of an IPRAN is further arranged on a device 1, VPN FRR protection superimposed with TE FRR is arranged, a master VPN label is 300, a TE tunnel label is 400, and a TE FRR label is 500. A standby VPN label is 301, and a TE tunnel label is 402. BGP PEER BFD is arranged on VPN FRR, with a session ID being 10, and tunnel BFD detection is arranged on TE, with a session ID being 11.

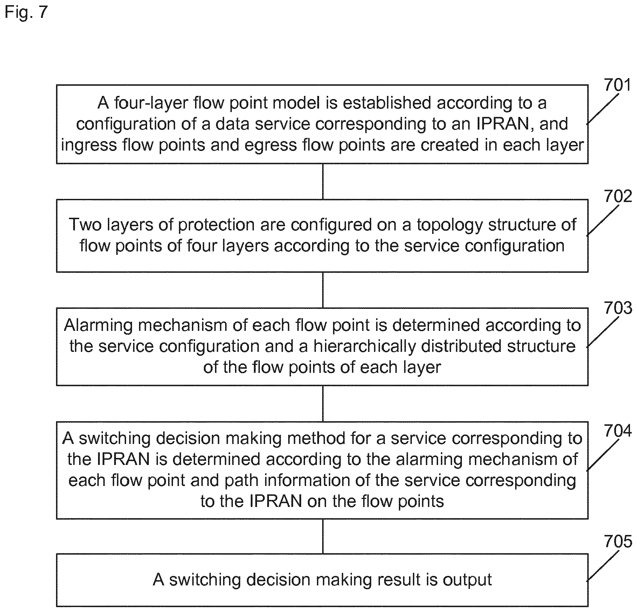

Fig. 7 is a flowchart of specific implementation according to embodiment 3 of the disclosure. As shown in Fig. 7, the method includes the following steps.

Step 701: a four-layer flow point model is established according to a configuration of a data service corresponding to an IPRAN, and ingress flow points and egress flow points are created in each layer.

Here, an establishment method for the four-layer flow point model is the same as the method in embodiment 2, and will not be elaborated herein.

Wherein, Table 5 is a topology table for path establishment of the ingress flow points, including associated OAM of this layer and service layer flow point relationship mapping; and

Table 6 is a topology table for path establishment of the egress flow points, including label and service layer flow point relationship mapping.

**Table 5**

| Flow point number | Flow point type | Path | Path selection before switching | Path selection after switching | Associated BFD number | Service layer flow point number |
|---|---|---|---|---|---|---|
| 20 | VC flow point | Working path | Effective | Effective | 10 | 21 |
| | | Protection path | Ineffective | Ineffective | None | 31 |
| 21 | VP flow point | Working path | Effective | Effective | None | 22 |
| | | Protection path | Ineffective | Ineffective | None | None |
| 31 | VP flow point | Working path | Effective | Effective | None | 32 |
| | | Protection path | Ineffective | Ineffective | None | None |
| 22 | VS-VP flow point | Working path | Effective | Ineffective | 11 | 4 |
| | | Protection path | Ineffective | Effective | None | 6 |
| 32 | VS-VP flow point | Working path | Effective | Effective | None | 14 |
| | | Protection path | Ineffective | Ineffective | None | None |
| 4 | VS flow point | Working path | Effective | Effective | None | Physical port 5/1 |
| 6 | VS flow point | Working path | Effective | Effective | None | Physical port 5/3 |
| 14 | VS flow point | Working path | Effective | Effective | None | Physical port 5/4 |

**Table 6**

| Flow point number | Flow point type | Path | Path selection before switching | Path selection after switching | Label | Associated BFD number | Service layer flow point number |
|---|---|---|---|---|---|---|---|
| 20 | VC flow point | Working path | Effective | Effective | 300 | 10 | 21 |
| | | Protection path | Ineffective | Ineffective | 301 | None | 31 |
| 21 | VP flow point | Working path | Effective | Effective | 400 | None | 22 |
| | | Protection path | Ineffective | Ineffective | None | None | None |
| 31 | VP flow point | Working path | Effective | Effective | 600 | None | 32 |
| | | Protection path | Ineffective | Ineffective | None | None | None |
| 22 | VS-VP flow point | Working path | Effective | Ineffective | None | 11 | 4 |
| | | Protection path | Ineffective | Effective | 500 | None | 6 |
| 32 | VS-VP flow point | Working path | Effective | Effective | None | None | 14 |
| | | Protection path | Ineffective | Ineffective | None | None | None |
| 4 | VS flow point | Working path | Effective | Effective | None | None | Physical port 5/1 |
| 6 | VS flow point | Working path | Effective | Effective | None | None | Physical port 5/3 |
| 14 | VS flow point | Working path | Effective | Effective | None | None | Physical port 5/4 |

Step 702: two layers of protection are arranged on a topology structure of flow points of four layers according to the service configuration.

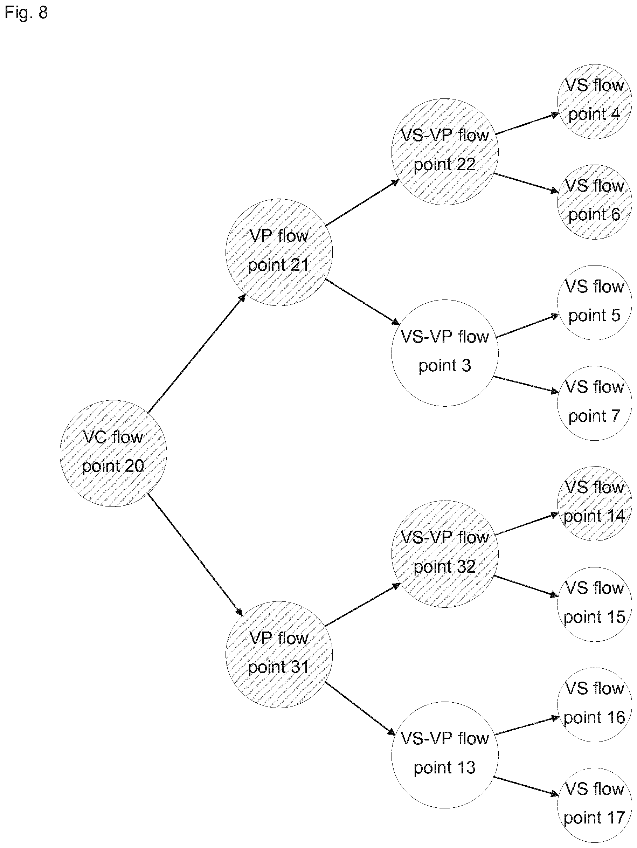

Wherein, Fig. 8 is a topological diagram of flow points of four layers according to embodiment 3 of the disclosure. As shown in Fig. 8, VS flow points of a first layer include: a VS flow point 4, a VS flow point 5, a VS flow point 6, a VS flow point 7, a VS flow point 14, a VS flow point 15, a VS flow point 16 and a VS flow point 17. VS-VP flow points of a second layer include: a VS-VP flow point 22, a VS-VP flow point 3, a VS-VP flow point 32 and a VS-VP flow point 13. VP flow points of a third layer include: a VP flow point 21 and a VP flow point 31. VC flow points of a fourth layer include a VC flow point 20.

Specifically, the first layer of TE FRR protection acts on the VS-VP flow points of the second layer, that is, one working line and one protection line are arranged on each flow point in the VS-VP flow points of the second layer, that is, there is at least one protection group in the VS-VP flow points of the second layer.

There is no second layer of LDP FRR protection in the embodiment.

A third layer of VPN FRR protection acts on the VC flow points of the fourth layer, that is, one working line and one protection line are arranged on each flow point in the VC flow points of the fourth layer. In such a manner, the two layers of protection are determined.

Table 7 is a table of association between a protection group and a flow point. As shown in Table 7, a protection group 3 corresponds to the third layer of protection.

**Table 7**

| Protection group number | Ingress flow point number | Egress flow point number | Protection group type | holdoff |
|---|---|---|---|---|
| 3 | 20 | 20 | 1:1 | None |
| 4 | 22 | 22 | 1:1 | None |

Step 703: alarming mechanism of each flow point is determined according to the service configuration and a hierarchically distributed structure of the flow points of each layer.

BFD detection and service layer flow point reproduction are associated on the topology of the ingress flow points, as shown in Table 5. BFD packet sending is associated on the paths of the egress flow points according to the service configuration, including label and service layer flow point relationship mapping, as shown in Table 6.

By the steps, a topology structure of the flow points of the four layers, i.e. the flow point topology structure of the service, may be established, as shown in Fig. 8. For the four-layer flow point model shown in Fig. 8, there are totally 8 bitmaps, and two layers of protection formed by superimposing PW 1:1 and TE FRR 1:1 are arranged. For a layer without a protection configuration, the working paths are adopted as a default. It may be clearly seen from the model that alarms of the paths of the ingress flow points in the VS-VP flow points of the second layer are sourced from BFD of this layer; and for the ingress flow points in the VP flow points of the third layer, alarms are sourced from alarms of service layers. Furthermore, the service layer of the working path of the VC flow point 21 has TE FRR protection, an alarm is sourced from an alarm of a current effective path in the service layer. For the egress flow point in the VC flow points of the fourth layer, an alarm is sourced from PEER BFD of this layer and alarms of the VP flow point 21 of the service layer. There may be three paths for a service started from the VC flow point to select, i.e. bitmap0, bitmap1 and bitmap4 respectively. The current effective path is bitmap0.

Wherein, the bitmap0 is that the service reaches the VS flow point 4 sequentially through the VP flow point 21 and the VS-VP flow point 22 from the VC flow point 20; the bitmap1 is that the service reaches the VS flow point 6 sequentially through the VP flow point 21 and the VS-VP flow point 22 from the VC flow point 20; and the bitmap4 is that the service reaches the VS flow point 14 sequentially through the VP flow point 31 and the VS-VP flow point 32 from the VC flow point 20.

Step 704: a switching decision making method for a service corresponding to the IPRAN is determined according to the alarming mechanism of each flow point and path information of the service corresponding to the IPRAN on the flow points.

When the port 5/1 has a failure, LSP BFD11 on a TE tunnel may detect an LOC alarm, and an SF is generated on the working path of the ingress flow point 22 in the VS-VP flow points of the second layer; an effective protection path is selected on a protection group 4 through alarming decision making mechanism, that is, switching to a standby FRR path; VPN FRR protection switching of the VS-VP flow point of the second layer is completed; a topological relationship between current ingress and egress flow points is updated; for VPN FRR protection of a client layer, there is usually no holdoff time configuration, reproduction to the client layer is not immediately performed after the SF is generated on the working path of the ingress flow point 22 in the VS-VP flow points of the second layer, and instead, a certain delay is added to ensure that the client layer may not sense switching of the service layer. In addition, when there is no holdoff arranged for the VC flow points of the fourth layer, the associated PEER BFD session ID 10 of this layer may usually be arranged with time longer than a sum of detection time of BFD and switching time of the service layer, and no switching alarm may be sensed, that is, the protection group of the client layer does not perform any switching operation. Therefore, for a bitmap of a service started from the VC flow point of the fourth layer, the effective path bitmap1 is automatically found according to the topology table after switching; and BFD of the client layer may also automatically encapsulate a message according to a new topological relationship.

After the failure is recovered, an upper-layer protocol starts a route re-optimization flow, and when MBB is ended, the bitmap is forced to be switched back to bitmap0 to implement back switching.

Step 705: a switching decision making result is output.

Specifically, the switching decision making result is hierarchically output. Current path selection states of the ingress and egress flow points of each layer have been maintained in Table 5 and Table 6, so that a hierarchical switching result in a receiving direction and a sending direction may be directly output.

Or, the switching decision making result is flatly output. A starting flow point bitmap table 8 is maintained to obtain a flat switching decision making result, wherein Table 8 is a starting flow point bitmap maintenance table in embodiment 3. A specific process is that: all the starting flow points are periodically polled, Table 6 is iteratively looked up for each starting flow point to finally obtain a number of its current bitmap in the flow points of the first layer, and if the current bitmap is inconsistent with the historical bitmap, the starting flow point and the bitmap are output. In the embodiment, the starting flow point is 20, is located in the flow points of the fourth layer, and has totally 8 bitmaps. The initial bitmap is 0, and after VP switching, the bitmap is changed into 1.

**Table 8**

| Starting flow point | Bitmap model | Historical bitmap | Current bitmap |
|---|---|---|---|
| 0 | N=4, 2³ paths | 0 | 2 |
| 20 | N=4, 2³ paths | 0 | 1 |

The final switching result may be notified to a switching execution module for service switching in form of message.

Here, when both the ports 5/1 and 5/3 have failures, according to the similar principle, for a bitmap of a service started from the VC flow point of the fourth layer, the effective path bitmap4 as an optional path is automatically found according to the topology table after switching.

From the above, the method of the embodiment of the disclosure may be applied to an integrated PTN and IPRAN device to solve a problem about protection switching in the PTN and the IPRAN.

Those skilled in the art should know that the embodiment of the disclosure may be provided as a method, a system or a computer program product. Therefore, the disclosure may adopt a form of pure hardware embodiment, pure software embodiment and combined software and hardware embodiment. Moreover, the disclosure may adopt a form of computer program product implemented on one or more computer-available storage media (including, but not limited to, a disk memory and an optical memory) including computer-available program codes.

The disclosure is described with reference to flowcharts and/or block diagrams of the method, equipment (system) and computer program product according to the embodiment of the disclosure. It should be understood that each flow and/or block in the flowcharts and/or the block diagrams and combinations of the flows and/or blocks in the flowcharts and/or the block diagrams may be implemented by computer program instructions. These computer program instructions may be provided for a universal computer, a dedicated computer, an embedded processor or a processor of other programmable data processing equipment to generate a machine, so that a device for realizing a function specified in one flow or more flows in the flowcharts and/or one block or more blocks in the block diagrams is generated by the instructions executed through the computer or the processor of the other programmable data processing equipment.

These computer program instructions may also be stored in a computer-readable memory capable of guiding the computer or the other programmable data processing equipment to work in a specific manner, so that a product including an instruction device may be generated by the instructions stored in the computer-readable memory, the instruction device realizing the function specified in one flow or many flows in the flowcharts and/or one block or many blocks in the block diagrams.

These computer program instructions may further be loaded onto the computer or the other programmable data processing equipment, so that a series of operating steps are executed on the computer or the other programmable data processing equipment to generate processing implemented by the computer, and steps for realizing the function specified in one flow or many flows in the flowcharts and/or one block or many blocks in the block diagrams are provided by the instructions executed on the computer or the other programmable data processing equipment.

The above is only the implementation mode of the embodiments of the disclosure. It is important to point out that those skilled in the art may further make a plurality of improvements and embellishments without departing from the principle of the embodiments of the disclosure, and these improvements and embellishments shall also fall within the scope of protection of the embodiments of the disclosure.

### INDUSTRIAL APPLICABILITY

According to the embodiments of the disclosure, a hierarchical protection structure may be determined through a unified hierarchical flow point structure, path switching decision making methods for services corresponding to the PTN and the IPRAN are further unified according to the hierarchical flow point structure and the hierarchical protection structure, and moreover, a path switching decision making method for the services corresponding to the PTN and the IPRAN may be clearly and completely determined according to the hierarchical flow point structure, the protection path set in each flow point and the alarming mechanism of each flow point in the embodiments of the disclosure. Therefore, by adopting the embodiments of the disclosure, design complexity and design cost of path protection and path selection may be reduced and a development period is shortened, and furthermore a foundation for improving reliability, extensibility, switching performance and the like of a system adopting the method of the embodiments of the disclosure is laid.

## Claims

1. A network protection switching method, comprising:
determining (101) a hierarchically distributed flow point model according to all ports corresponding to a Packet Transport Network, PTN, or an Internet Protocol, IP, Radio Access Network, IPRAN, or physical ports or physical port sets in a physical connection channel layer; and
determining (102) a switching decision making method for a service corresponding to the PTN or the IPRAN according to the flow point model;
further comprising:
determining optimal path information of the service corresponding to the PTN or the IPRAN according to the switching decision making method, and outputting the optimal path information, wherein
the optimal path information is effective path information by which the service is intended to pass through each flow point in the flow point model, and the effective path information is identification of a path of flow points corresponding to physical ports; and
determining the hierarchically distributed flow point model according to all the ports corresponding to the PTN or the IPRAN or the physical ports or physical port sets in the physical connection channel layer comprises:
determining all the ports corresponding to the PTN or the IPRAN or the physical ports or physical port sets in the physical connection channel layer as flow points of a first layer, determining flow points of a next layer according to the flow points of the first layer and a first preset rule, and determining the hierarchically distributed flow point model.

2. The method according to claim 1, after determining the hierarchically distributed flow point model according to all the ports corresponding to the PTN or the IPRAN or the physical ports or physical port sets in the physical connection channel layer, the method further comprising:
determining working paths or working paths and protection paths of the service corresponding to the PTN or the IPRAN on the flow points in the flow point model according to a second preset rule; and
determining alarming mechanism of each flow point according to a hierarchically distributed structure of the flow points of each layer in the flow point model;
wherein determining the alarming mechanism of each flow point according to the hierarchically distributed structure of the flow points of each layer comprises:
determining that alarming information of each flow point in the flow points of the first layer is sourced from alarming information generated by physical ports corresponding to the PTN or the IPRAN, or alarming information generated by corresponding Transport MPLS Section, TMS, OAM in the physical connection channel layer; and
determining that alarming information of each flow point in the flow points of the i-th layer is sourced from the OAM of this layer or alarming information generated by the service layers,
wherein i is a positive integer greater than or equal to 2 and less than or equal to N.

3. The method according to claim 2, wherein determining the switching decision making method for the service corresponding to the PTN or the IPRAN according to the flow point model comprises:
determining the switching decision making method for the service corresponding to the PTN or the IPRAN according to the alarming mechanism of each flow point and path information of the service corresponding to the PTN or the IPRAN on the flow points,
wherein the path information is identification of the working paths and/or the protection paths through which the service corresponding to the PTN or the IPRAN is intended to pass through each flow point in the flow point model.

4. The method according to claim 3, wherein determining the switching decision making method for the service corresponding to the PTN or the IPRAN according to the alarming mechanism of each flow point and the path information of the service corresponding to the PTN or the IPRAN on the flow points comprises:
determining path information by which the service corresponding to the PTN or the IPRAN passes through one flow point according to the alarming mechanism of each flow point in the flow point model and the path information of the service corresponding to the PTN or the IPRAN on the flow points, and determining optimal path information by which the service corresponding to the PTN or the IPRAN passes through all the flow points according to the path information by which the service corresponding to the PTN or the IPRAN passes through each flow point.

5. The method according to claim 1, further comprising:
determining working instruction information or protection instruction information of each flow point in the flow point model according to the effective path information,
wherein the working instruction information is instruction information of selecting the working path for passing when the service corresponding to the PTN or the IPRAN passes through the flow point; and
the protection instruction information is instruction information of selecting the protection path for passing when the service corresponding to the PTN or the IPRAN passes through the flow point.

6. The method according to any one of claims 1-3, further comprising:
configuring Operation Administration and Maintenance, OAM, information to the working path and protection path of each flow point according to the hierarchically distributed structure of the flow points of each layer in the flow point model, to determine an OAM label of the working path or protection path of each flow point through which the service corresponding to the PTN or the IPRAN passes according to the OAM information;
further comprising:
determining unique identification of the working path of the service corresponding to the PTN or the IPRAN on each flow point in the flow point model, determining unique identification of the protection path of the service corresponding to the PTN or the IPRAN on each flow point, and determining the unique identification of the working path and the unique identification of the protection path corresponding to each flow point as OAM labels corresponding to each path.

7. The method according to any one of claims 2-4, wherein flow points of client layers of the flow points of the first layer are flow points of a next layer; the flow points of the first layer have no service layers, or, flow points of the service layers of the flow points of the first layer are ports corresponding to the PTN or the IPRAN; and the service corresponding to the PTN or the IPRAN on each flow point in the flow points of the first layer has one working path, or has one working path and one protection path.

8. The method according to claim 7, further comprising:
when it is determined that there are flow points of an N-layer structure according to a service type corresponding to the PTN or the IPRAN and the first preset rule, determining that: flow points of an i-th layer are client layers of flow points of an (i-1)-th layer; the service corresponding to the PTN or the IPRAN on each flow point in the flow points of the i-th layer has one working path, or has one working path and one protection path; client layers of the flow points of the i-th layer are flow points of an (i+1)-th layer, or is a user service of this layer; and service layers of the flow points of the i-th layer are the flow points of the (i-1)-th layer; and
when i is equal to N, determining that client layers of flow points of an N-th layer are the user service of this layer,
wherein N is a positive integer greater than or equal to 2, and i is a positive integer greater than or equal to 2 and less than or equal to N.

9. A network apparatus, comprising:
a modelling processing device, arranged to determine a hierarchically distributed flow point model according to all ports corresponding to a Packet Transport Network, PTN, or an Internet Protocol, IP, Radio Access Network, IPRAN, or physical ports or physical port sets in a physical connection channel layer; and
a decision making processing device, arranged to determine a switching decision making method for a service corresponding to the PTN or the IPRAN according to the flow point model, determine optimal path information of the service corresponding to the PTN or the IPRAN according to the switching decision making method, and output the optimal path information,
wherein the optimal path information is effective path information by which the service is intended to pass through each flow point in the flow point model, and the effective path information is identification of a path of flow points corresponding to physical ports; and
determining the hierarchically distributed flow point model according to all the ports corresponding to the PTN or the IPRAN or the physical ports or physical port sets in the physical connection channel layer comprises:
determining all the ports corresponding to the PTN or the IPRAN or the physical ports or physical port sets in the physical connection channel layer as flow points of a first layer, determining flow points of a next layer according to the flow points of the first layer and a first preset rule, and determining the hierarchically distributed flow point model.

10. The apparatus according to claim 9, wherein the modelling processing device is further arranged to determine all the ports corresponding to the PTN or the IPRAN or the physical ports or physical port sets in the physical connection channel layer as flow points of a first layer, determine flow points of a next layer according to the flow points of the first layer and a first preset rule, and determine the hierarchically distributed flow point model;
further comprising:
a path processing device, arranged to determine working paths or the working paths and protection paths of the service corresponding to the PTN or the IPRAN on the flow points in the flow point model according to a second preset rule; and
an alarming processing device, arranged to determine alarming mechanism of each flow point according to a hierarchically distributed structure of the flow points of each layer in the flow point model.

11. The apparatus according to claim 10, wherein the decision making processing device is further arranged to determine the switching decision making method for the service corresponding to the PTN or the IPRAN according to the alarming mechanism of each flow point and path information of the service corresponding to the PTN or the IPRAN on the flow points,
wherein the path information is identification of the working paths and/or the protection paths through which the service corresponding to the PTN or the IPRAN is intended to pass through each flow point in the flow point model.

12. The apparatus according to any one of claims 9-11, further comprising:
a label processing device, arranged to configure Operation Administration and Maintenance, OAM, information to the working path and protection path of each flow point according to the hierarchically distributed structure of the flow points of each layer in the flow point model, to determine an OAM label of the working path or protection path of each flow point through which the service corresponding to the PTN or the IPRAN passes according to the OAM information.

13. A computer-readable storage medium, in which a computer-executable instruction is stored, the computer-executable instruction being arranged to execute every step of the network protection switching method according to any one of claims 1-8.

## Patentansprüche

1. Netzwerksicherungsschaltverfahren, umfassend:
Bestimmen (101) eines hierarchisch verteilten Flusspunktmodells gemäß allen Ports, die einem Pakettransportnetzwerk, PTN, oder einem Internetprotokoll, IP,-Funkzugangsnetzwerk, IPRAN, entsprechen, oder den physikalischen Ports oder physikalischen Portsätzen in einer physikalischen Verbindungskanalschicht; und
Bestimmen (102) eines Schaltentscheidungsfindungsverfahrens für einen Dienst, der dem PTN oder dem IPRAN entspricht, gemäß dem Flusspunktmodell;
ferner umfassend:
Bestimmen von Optimalpfad-Informationen des Dienstes, der dem PTN oder dem IPRAN entspricht, gemäß dem Schaltentscheidungsfindungsverfahren und Ausgeben der Optimalpfad-Informationen, wobei
die Optimalpfad-Informationen Effektivpfad-Informationen sind, durch welche der Dienst durch jeden Flusspunkt im Flusspunktmodell durchlaufen soll, und es sich bei den Effektivpfad-Informationen um eine Angabe eines Pfades von Flusspunkten handelt, die physikalischen Ports entsprechen; und
wobei das Bestimmen des hierarchisch verteilten Flusspunktmodells gemäß allen Ports, die dem PTN oder dem IPRAN entsprechen, oder den physikalischen Ports oder physikalischen Portsätzen in der physikalischen Verbindungskanalschicht umfasst:
Bestimmen aller Ports, die dem PTN oder dem IPRAN entsprechen, oder der physikalischen Ports oder physikalischen Portsätze in der physikalischen Verbindungskanalschicht als Flusspunkte einer ersten Schicht, Bestimmen von Flusspunkten einer nächsten Schicht gemäß den Flusspunkten der ersten Schicht und einer ersten vorgegebenen Regel und Bestimmen des hierarchisch verteilten Flusspunktmodells.

2. Verfahren nach Anspruch 1, wobei das Verfahren nach dem Bestimmen des hierarchisch verteilten Flusspunktmodells gemäß allen Ports, die dem PTN oder dem IPRAN entsprechen, oder den physikalischen Ports oder physikalischen Portsätzen in der physikalischen Verbindungskanalschicht ferner umfasst:
Bestimmen von Arbeitspfaden oder Arbeitspfaden und Sicherungspfaden des Dienstes, der dem PTN oder dem IPRAN entspricht, an den Flusspunkten im Flusspunktmodell gemäß einer zweiten vorgegebenen Regel; und
Bestimmen eines Alarmmechanismus jedes Flusspunkts gemäß einer hierarchisch verteilten Struktur der Flusspunkte jeder Schicht im Flusspunktmodell;
wobei das Bestimmen des Alarmmechanismus jedes Flusspunkts gemäß der hierarchisch verteilten Struktur der Flusspunkte jeder Schicht umfasst:
Bestimmen, dass Alarminformationen jedes Flusspunkts in den Flusspunkten der ersten Schicht aus Alarminformationen, die durch physikalische Ports erzeugt werden, die dem PTN oder dem IPRAN entsprechen, oder Alarminformationen bezogen werden, die von einem Transport-MPLS-Sektions, TMS,-OAM in der physikalischen Verbindungskanalschicht erzeugt werden; und
Bestimmen, dass Alarminformationen jedes Flusspunkts in den Flusspunkten der i-ten Schicht vom OAM dieser Schicht oder aus Alarminformationen bezogen werden, die von den Dienstschichten erzeugt werden,
wobei i eine positive ganze Zahl größer als oder gleich 2 und kleiner als oder gleich N ist.

3. Verfahren nach Anspruch 2, wobei das Bestimmen des Schaltentscheidungsfindungsverfahrens für einen Dienst, der dem PTN oder dem IPRAN entspricht, gemäß dem Flusspunktmodell umfasst:
Bestimmen des Schaltentscheidungsfindungsverfahrens für den Dienst, der dem PTN oder dem IPRAN entspricht, gemäß dem Alarmmechanismus jedes Flusspunkts und Pfadinformationen des Dienstes, der dem PTN oder dem IPRAN entspricht, an den Flusspunkten,
wobei es sich bei den Pfadinformationen um eine Identifikation der Arbeitspfade und/oder der Sicherungspfade handelt. durch welche der Dienst, der dem PTN oder dem IPRAN entspricht, durch jeden Flusspunkt im Flusspunktmodell durchlaufen soll.

4. Verfahren nach Anspruch 3, wobei das Bestimmen des Schaltentscheidungsfindungsverfahrens für den Dienst, der dem PTN oder dem IPRAN entspricht, gemäß dem Alarmmechanismus jedes Flusspunkts und Pfadinformationen des Dienstes, der dem PTN oder dem IPRAN entspricht, an den Flusspunkten umfasst:
Bestimmen von Pfadinformationen, durch welche der Dienst, der dem PTN oder dem IPRAN entspricht, durch einen Flusspunkt durchläuft, gemäß dem Alarmmechanismus jedes Flusspunkts im Flusspunktmodell und den Pfadinformationen des Dienstes, der dem PTN oder dem IPRAN entspricht, an den Flusspunkten und Bestimmen von Optimalpfad-Informationen, durch welche der Dienst, der dem PTN oder dem IPRAN entspricht, durch alle Flusspunkte durchläuft, gemäß den Pfadinformationen, durch welche der Dienst, der dem PTN oder dem IPRAN entspricht, durch jeden Flusspunkt durchläuft.

5. Verfahren nach Anspruch 1, ferner umfassend:
Bestimmen von Arbeitsanweisungsinformationen oder Sicherungsanweisungsinformationen jedes Flusspunkts im Flusspunktmodell gemäß den Effektivpfad-Informationen,
wobei die Arbeitsanweisungsinformationen Anweisungsinformationen zum Auswählen des zu durchlaufenden Arbeitspfades sind, wenn der Dienst, der dem PTN oder dem IPRAN entspricht, durch den Flusspunkt durchläuft;
die Sicherungsanweisungsinformationen Anweisungsinformationen zum Auswählen des zu durchlaufenden Sicherungspfades sind, wenn der Dienst, der dem PTN oder dem IPRAN entspricht, durch den Flusspunkt durchläuft.

6. Verfahren nach einem der Ansprüche 1 bis 3, ferner umfassend:
Konfigurieren von Betriebs-, Verwaltungs- und Wartungs, OAM,-Informationen für den Arbeitspfad und den Sicherungspfad jedes Flusspunkts gemäß der hierarchisch verteilten Struktur der Flusspunkte jeder Schicht im Flusspunktmodell, um eine OAM-Kennzeichnung des Arbeitspfades oder des Sicherungspfades jedes Flusspunkts, durch welchen der Dienst durchläuft, der dem PTN oder dem IPRAN entspricht, gemäß den OAM-Informationen zu bestimmen;
ferner umfassend:
Bestimmen einer eindeutigen Identifikation des Arbeitspfades des Dienstes, der dem PTN oder dem IPRAN entspricht, an jedem Flusspunkt im Flusspunktmodell, Bestimmen einer eindeutigen Identifikation des Sicherungspfades des Dienstes, der dem PTN oder dem IPRAN entspricht, an jedem Flusspunkt und Bestimmen der eindeutigen Identifikation des Arbeitspfades und der eindeutigen Identifikation des Sicherungspfades, die jedem Flusspunkt entsprechen, als OAM-Kennzeichnungen, die jedem Pfad entsprechen.

7. Verfahren nach einem der Ansprüche 2 bis 4, wobei Flusspunkte von Client-Schichten der Flusspunkte der ersten Schicht Flusspunkte einer nächsten Schicht sind; die Flusspunkte der ersten Schicht keine Dienstschichten aufweisen, oder Flusspunkte der Dienstschichten der Flusspunkte der ersten Schicht Ports sind, die dem PTN oder dem IPRAN entsprechen; und der Dienst, der dem PTN oder dem IPRAN entspricht, an jedem Flusspunkt in den Flusspunkten der ersten Schicht einen Arbeitspfad aufweist, oder einen Arbeitspfad und einen Sicherungspfad aufweist.

8. Verfahren nach Anspruch 7, ferner umfassend:
Bestimmen, wenn gemäß einem Diensttyp, der dem PTN oder dem IPRAN entspricht, und der ersten vorgegebenen Regel bestimmt wird, dass es Flusspunkte einer N-Schichten-Struktur gibt, dass: Flusspunkte einer i-ten Schicht Client-Schichten von Fusspunkten einer (i - 1)-ten Schicht snd; der Dienst, der dem PTN oder dem IPRAN entspricht, an jedem Flusspunkt in den Flusspunkten der i-ten Schicht einen Arbeitspfad aufweist, oder einen Arbeitspfad und einen Sicherungspfad aufweist; Client-Schichten der Flusspunkte der i-ten Schicht Flusspunkte einer (i + 1)-ten Schicht sind, oder es sich dabei um einen Benutzerdienst dieser Schicht handelt; und Dienstschichten der Flusspunkte der i-ten Schicht die Flusspunkte der (i - 1)-ten Schicht sind; und
Bestimmen, wenn i gleich N ist, dass es sich bei Client-Schichten von Flusspunkten einer N-ten Schicht um den Benutzerdienst dieser Schicht handelt,
wobei N eine positive ganze Zahl größer als oder gleich 2 ist, und i eine positive ganze Zahl größer als oder gleich 2 und kleiner als oder gleich N ist.

9. Netzwerkvorrichtung, umfassend:
eine Modellierungsverarbeitungseinrichtung, die zum Bestimmen eines hierarchisch verteilten Flusspunktmodells gemäß allen Ports, die einem Pakettransportnetzwerk, PTN, oder einem Internetprotokoll, IP,-Funkzugangsnetzwerk, IPRAN, entsprechen, oder den physikalischen Ports oder physikalischen Portsätzen in einer physikalischen Verbindungskanalschicht ausgelegt ist; und
eine Entscheidungsfindungsverarbeitungseinrichtung, die zum Bestimmen eines Schaltentscheidungsfindungsverfahrens für einen Dienst, der dem PTN oder dem IPRAN entspricht, gemäß dem Flusspunktmodel, Bestimmen von Optimalpfad-Informationen des Dienstes, der dem PTN oder dem IPRAN entspricht, gemäß dem Schaltentscheidungsfindungsverfahren und Ausgeben der Optimalpfad-Informationen ausgelegt ist,
wobei die Optimalpfad-Informationen Effektivpfad-Informationen sind, durch welche der Dienst durch jeden Flusspunkt im Flusspunktmodell durchlaufen soll, und es sich bei den Effektivpfad-Informationen um eine Angabe eines Pfades von Flusspunkten handelt, die physikalischen Ports entsprechen; und
wobei das Bestimmen des hierarchisch verteilten Flusspunktmodells gemäß allen Ports, die dem PTN oder dem IPRAN entsprechen, oder den physikalischen Ports oder physikalischen Portsätzen in der physikalischen Verbindungskanalschicht umfasst:
Bestimmen aller Ports, die dem PTN oder dem IPRAN entsprechen, oder der physikalischen Ports oder physikalischen Portsätze in der physikalischen Verbindungskanalschicht als Flusspunkte einer ersten Schicht, Bestimmen von Flusspunkten einer nächsten Schicht gemäß den Flusspunkten der ersten Schicht und einer ersten vorgegebenen Regel und Bestimmen des hierarchisch verteilten Flusspunktmodells.

10. Vorrichtung nach Anspruch 9, wobei die Modellierungsverarbeitungseinrichtung ferner zum Bestimmen aller Ports, die dem PTN oder dem IPRAN entsprechen, oder der physikalischen Ports oder physikalischen Portsätze in der physikalischen Verbindungskanalschicht als Flusspunkte einer ersten Schicht, Bestimmen von Flusspunkten einer nächsten Schicht gemäß den Flusspunkten der ersten Schicht und einer ersten vorgegebenen Regel und Bestimmen des hierarchisch verteilten Flusspunktmodells ausgelegt ist;
ferner umfassend:
eine Pfadverarbeitungseinrichtung, die zum Bestimmen von Arbeitspfaden oder Arbeitspfaden und Sicherungspfaden des Dienstes, der dem PTN oder dem IPRAN entspricht, an den Flusspunkten im Flusspunktmodell gemäß einer zweiten vorgegebenen Regel ausgelegt ist; und
eine Alarmverarbeitungseinrichtung, die zum Bestimmen eines Alarmmechanismus jedes Flusspunkts gemäß einer hierarchisch verteilten Struktur der Flusspunkte jeder Schicht im Flusspunktmodell ausgelegt ist.

11. Vorrichtung nach Anspruch 10, wobei die Entscheidungsfindungsverarbeitungseinrichtung ferner zum Bestimmen des Schaltentscheidungsfindungsverfahrens für den Dienst, der dem PTN oder dem IPRAN entspricht, gemäß dem Alarmmechanismus jedes Flusspunkts und Pfadinformationen des Dienstes, der dem PTN oder dem IPRAN entspricht, an den Flusspunkten ausgelegt ist,
wobei es sich bei den Pfadinformationen um eine Identifikation der Arbeitspfade und/oder der Sicherungspfade handelt. durch welche der Dienst, der dem PTN oder dem IPRAN entspricht, durch jeden Flusspunkt im Flusspunktmodell durchlaufen soll.

12. Vorrichtung nach einem der Ansprüche 9 bis 11, ferner umfassend:
eine Kennzeichnungsverarbeitungseinrichtung, die so konfiguriert ist, dass sie Betriebs-, Verwaltungs- und Wartungs, OAM,-Informationen für den Arbeitspfad und den Sicherungspfad jedes Flusspunkts gemäß der hierarchisch verteilten Struktur der Flusspunkte jeder Schicht im Flusspunktmodell konfiguriert, um eine OAM-Kennzeichnung des Arbeitspfades oder des Sicherungspfades jedes Flusspunkts, durch welchen der Dienst durchläuft, der dem PTN oder dem IPRAN entspricht, gemäß den OAM-Informationen zu bestimmen.

13. Computerlesbares Speichermedium, in welchem eine computerausführbare Anweisung gespeichert ist, wobei die computerausführbare Anweisung so ausgelegt ist, dass sie jeden Schritt des Netzwerksicherungsschaltverfahrens nach einem der Ansprüche 1 bis 8 ausführt.

## Revendications

1. Procédé de commutation de protection de réseau, comprenant les étapes ci-dessous consistant à :
déterminer (101) un modèle de points de flux répartis hiérarchiquement selon tous les ports correspondant à un réseau de transport de paquets, PTN, ou à un réseau d'accès radio, RAN, de protocole IP, IPRAN, ou à des ports physiques ou des ensembles de ports physiques dans une couche de canal de connexion physique ; et
déterminer (102) un procédé de prise de décision de commutation pour un service correspondant au réseau PTN ou au réseau IPRAN selon le modèle de points de flux ;
comprenant en outre les étapes ci-dessous consistant à :
déterminer des informations de trajet optimal du service correspondant au réseau PTN ou au réseau IPRAN selon le procédé de prise de décision de commutation, et fournir en sortie les informations de trajet optimal, dans lequel
les informations de trajet optimal correspondent à des informations de trajet efficace par lesquelles le service est censé passer à travers chaque point de flux dans le modèle de points de flux, et les informations de trajet efficace correspondent à l'identification d'un trajet de points de flux correspondant à des ports physiques ; et
dans lequel l'étape consistant à déterminer le modèle de points de flux répartis hiérarchiquement selon tous les ports correspondant au réseau PTN ou au réseau IPRAN ou aux ports physiques ou ensembles de ports physiques dans la couche de canal de connexion physique comprend les étapes ci-dessous consistant à :
déterminer tous les ports correspondant au réseau PTN ou au réseau IPRAN ou aux ports physiques ou ensembles de ports physiques dans la couche de canal de connexion physique, en tant que des points de flux d'une première couche, déterminer des points de flux d'une couche successive selon les points de flux de la première couche et une première règle prédéfinie, et déterminer le modèle de points de flux répartis hiérarchiquement.

2. Procédé selon la revendication 1, dans lequel, suite à la détermination du modèle de points de flux répartis hiérarchiquement selon tous les ports correspondant au réseau PTN ou au réseau IPRAN ou aux ports physiques ou ensembles de ports physiques dans la couche de canal de connexion physique, le procédé comprend en outre les étapes ci-dessous consistant à :
déterminer des trajets de travail, ou des trajets de travail et des trajets de protection du service correspondant au réseau PTN ou au réseau IPRAN sur les points de flux dans le modèle de points de flux selon une seconde règle prédéfinie ; et
déterminer un mécanisme d'alarme de chaque point de flux selon une structure répartie hiérarchiquement des points de flux de chaque couche dans le modèle de points de flux ;
dans lequel l'étape de détermination du mécanisme d'alarme de chaque point de flux selon la structure répartie hiérarchiquement des points de flux de chaque couche comprend les étapes ci-dessous consistant à :
déterminer que des informations d'alarme de chaque point de flux dans les points de flux de la première couche proviennent d'informations d'alarme générées par des ports physiques correspondant au réseau PTN ou au réseau IPRAN, ou d'informations d'alarme générées par un niveau exploitation, administration et maintenance, OAM, de section de commutation MPLS de transport correspondante, TMS, dans la couche de canal de connexion physique ; et
déterminer que des informations d'alarme de chaque point de flux dans les points de flux de la i-ème couche proviennent du niveau OAM de cette couche ou d'informations d'alarme générées par les couches de service ;
dans lequel « i » est un nombre entier positif supérieur ou égal à 2 et inférieur ou égal à N.

3. Procédé selon la revendication 2, dans lequel l'étape de détermination du procédé de prise de décision de commutation pour le service correspondant au réseau PTN ou au réseau IPRAN selon le modèle de points de flux comprend les étapes ci-dessous consistant à :
déterminer le procédé de prise de décision de commutation pour le service correspondant au réseau PTN ou au réseau IPRAN selon le mécanisme d'alarme de chaque point de flux et des informations de trajet du service correspondant au réseau PTN ou au réseau IPRAN sur les points de flux ;
dans lequel les informations de trajet correspondent à l'identification des trajets de travail et/ou des trajets de protection à travers lesquels le service correspondant au réseau PTN ou au réseau IPRAN est censé passer à travers chaque point de flux dans le modèle de points de flux.

4. Procédé selon la revendication 3, dans lequel l'étape de détermination du procédé de prise de décision de commutation pour le service correspondant au réseau PTN ou au réseau IPRAN selon le mécanisme d'alarme de chaque point de flux et les informations de trajet du service correspondant au réseau PTN ou au réseau IPRAN sur les points de flux comprend les étapes ci-dessous consistant à :
déterminer des informations de trajet par lesquelles le service correspondant au réseau PTN ou au réseau IPRAN passe à travers un point de flux selon le mécanisme d'alarme de chaque point de flux dans le modèle de points de flux et les informations de trajet du service correspondant au réseau PTN ou au réseau IPRAN sur les points de flux, et déterminer des informations de trajet optimal par lesquelles le service correspondant au réseau PTN ou au réseau IPRAN passe à travers tous les points de flux selon les informations de trajet par lesquelles le service correspondant au réseau PTN ou au réseau IPRAN passe à travers chaque point de flux.

5. Procédé selon la revendication 1, comprenant en outre les étapes ci-dessous consistant à :
déterminer des informations d'instruction de travail ou des informations d'instruction de protection de chaque point de flux dans le modèle de points de flux selon les informations de trajet efficace ;
dans lequel les informations d'instruction de travail correspondent à des informations d'instruction pour sélectionner le trajet de travail par lequel passer lorsque le service correspondant au réseau PTN ou au réseau IPRAN passe à travers le point de flux ; et
les informations d'instruction de protection correspondent à des informations d'instruction pour sélectionner le trajet de protection par lequel passer lorsque le service correspondant au réseau PTN ou au réseau IPRAN passe à travers le point de flux.

6. Procédé selon l'une quelconque des revendications 1 à 3, comprenant en outre l'étape ci-dessous consistant à :
configurer des informations d'exploitation, administration et maintenance, OAM, sur le trajet de travail et le trajet de protection de chaque point de flux selon la structure répartie hiérarchiquement des points de flux de chaque couche dans le modèle de points de flux, en vue de déterminer une étiquette OAM du trajet de travail ou du trajet de protection de chaque point de flux à travers lequel passe le service correspondant au réseau PTN ou au réseau IPRAN selon les informations OAM ;
comprenant en outre les étapes ci-dessous consistant à :
déterminer une identification unique du trajet de travail du service correspondant au réseau PTN ou au réseau IPRAN sur chaque point de flux dans le modèle de points de flux, déterminer une identification unique du trajet de protection du service correspondant au réseau PTN ou au réseau IPRAN sur chaque point de flux, et déterminer l'identification unique du trajet de travail et l'identification unique du trajet de protection correspondant à chaque point de flux, en tant que des étiquettes OAM correspondant à chaque trajet.

7. Procédé selon l'une quelconque des revendications 2 à 4, dans lequel des points de flux de couches clientes des points de flux de la première couche sont des points de flux d'une couche successive ; les points de flux de la première couche n'ont pas de couches de service, ou des points de flux des couches de service des points de flux de la première couche sont des ports correspondant au réseau PTN ou au réseau IPRAN ; et le service correspondant au réseau PTN ou au réseau IPRAN sur chaque point de flux dans les points de flux de la première couche présente un trajet de travail, ou présente un trajet de travail et un trajet de protection.

8. Procédé selon la revendication 7, comprenant en outre les étapes ci-dessous consistant à :
lorsqu'il est déterminé qu'il existe des points de flux d'une structure à N couches selon un type de service correspondant au réseau PTN ou au réseau IPRAN et la première règle prédéfinie, déterminer que : les points de flux d'une i-ème couche sont des couches clientes de points de flux d'une (i-1)-ème couche ; le service correspondant au réseau PTN ou au réseau IPRAN sur chaque point de flux dans les points de flux de la i-ème couche présente un trajet de travail, ou présente un trajet de travail et un trajet de protection ; des couches clientes des points de flux de la i-ème couche sont des points de flux d'une (i+1)-ème couche, ou correspondent à un service utilisateur de cette couche ; et des couches de service des points de flux de la i-ème couche sont les points de flux de la (i-1)-ème couche ; et
lorsque « i » est égal à N, déterminer que des couches clientes de points de flux d'une N-ième couche correspondent au service utilisateur de cette couche ;
dans lequel « N » est un nombre entier positif supérieur ou égal à 2, et « i » est un nombre entier positif supérieur ou égal à 2 et inférieur ou égal à N.

9. Appareil de réseau, comprenant :
un dispositif de traitement de modélisation, agencé de manière à déterminer un modèle de points de flux répartis hiérarchiquement selon tous les ports correspondant à un réseau de transport de paquets. PTN, ou à un réseau d'accès radio, RAN, de protocole IP, IPRAN, ou à des ports physiques ou des ensembles de ports physiques dans une couche de canal de connexion physique ; et
un dispositif de traitement de prise de décision, agencé de manière à déterminer un procédé de prise de décision de commutation pour un service correspondant au réseau PTN ou au réseau IPRAN selon le modèle de points de flux, à déterminer des informations de trajet optimal du service correspondant au réseau PTN ou au réseau IPRAN selon le procédé de prise de décision de commutation, et à fournir en sortie les informations de trajet optimal ;
dans lequel les informations de trajet optimal correspondent à des informations de trajet efficace par lesquelles le service est censé passer à travers chaque point de flux dans le modèle de points de flux, et les informations de trajet efficace correspondent à l'identification d'un trajet de points de flux correspondant à des ports physiques ; et
dans lequel l'étape consistant à déterminer le modèle de points de flux répartis hiérarchiquement selon tous les ports correspondant au réseau PTN ou au réseau IPRAN ou aux ports physiques ou ensembles de ports physiques dans la couche de canal de connexion physique comprend les étapes ci-dessous consistant à :
déterminer tous les ports correspondant au réseau PTN ou au réseau IPRAN ou aux ports physiques ou ensembles de ports physiques dans la couche de canal de connexion physique, en tant que des points de flux d'une première couche, déterminer des points de flux d'une couche successive selon les points de flux de la première couche et une première règle prédéfinie, et déterminer le modèle de points de flux répartis hiérarchiquement.

10. Appareil selon la revendication 9, dans lequel le dispositif de traitement de modélisation est en outre agencé de manière à déterminer tous les ports correspondant au réseau PTN ou au réseau IPRAN ou aux ports physiques ou ensembles de ports physiques dans la couche de canal de connexion physique en tant que des points de flux d'une première couche, à déterminer des points de flux d'une couche successive selon les points de flux de la première couche et une première règle prédéfinie, et à déterminer le modèle de points de flux répartis hiérarchiquement ;
comprenant en outre :
un dispositif de traitement de trajets, agencé de manière à déterminer des trajets de travail, ou les trajets de travail et des trajets de protection du service correspondant au réseau PTN ou au réseau IPRAN sur les points de flux dans le modèle de points de flux selon une seconde règle prédéfinie ; et
un dispositif de traitement d'alarme, agencé de manière à déterminer le mécanisme d'alarme de chaque point de flux selon une structure répartie hiérarchiquement des points de flux de chaque couche dans le modèle de points de flux.

11. Appareil selon la revendication 10, dans lequel le dispositif de traitement de prise de décision est en outre agencé de manière à déterminer le procédé de prise de décision de commutation pour le service correspondant au réseau PTN ou au réseau IPRAN selon le mécanisme d'alarme de chaque point de flux et des informations de trajet du service correspondant au réseau PTN ou au réseau IPRAN sur les points de flux ;
dans lequel les informations de trajet correspondent à l'identification des trajets de travail et/ou des trajets de protection à travers lesquels le service correspondant au réseau PTN ou au réseau IPRAN est censé passer à travers chaque point de flux dans le modèle de points de flux.

12. Appareil selon l'une quelconque des revendications 9 à 11, comprenant en outre :
un dispositif de traitement d'étiquettes, agencé de manière à configurer des informations d'exploitation, administration et maintenance, OAM, sur le trajet de travail et le trajet de protection de chaque point de flux selon la structure répartie hiérarchiquement des points de flux de chaque couche dans le modèle de points de flux, et à déterminer une étiquette OAM du trajet de travail ou du trajet de protection de chaque point de flux à travers lequel passe le service correspondant au réseau PTN ou au réseau IPRAN selon les informations OAM.

13. Support de stockage lisible par ordinateur, dans lequel une instruction exécutable par ordinateur est stockée, l'instruction exécutable par ordinateur étant agencée de manière à exécuter chaque étape du procédé de commutation de protection de réseau selon l'une quelconque des revendications 1 à 8.
